# EUROPEAN PATENT SPECIFICATION

(11) **EP 3 863 274 B1**
(45) Date of publication and mention of the grant of the patent: **26.03.2025**
(21) Application number: 21152381.6
(22) Date of filing: 19.01.2021
(51) Int. Cl.: H04N 23/63, H04N 23/90

(54) **INFORMATION PROCESSING METHOD, CARRIER MEANS, AND INFORMATION PROCESSING APPARATUS**
INFORMATIONSVERARBEITUNGSVERFAHREN, TRÄGERMITTEL UND INFORMATIONSVERARBEITUNGSGERÄT
PROCÉDÉ DE TRAITEMENT D'INFORMATIONS, MOYENS DE SUPPORT ET APPAREIL DE TRAITEMENT D'INFORMATIONS

(30) Priority: 07.02.2020 JP 2020019934
(43) Date of publication of application: 11.08.2021
(73) Proprietor: Ricoh Company, Ltd., Tokyo 143-8555 (JP)
(72) Inventor: FUKUOKA, Yusuke, Tokyo, 143-8555 (JP); TORII, Osamu, Tokyo, 143-8555 (JP); MARUMOTO, Kohei, Tokyo, 143-8555 (JP)
(74) Representative: Marks & Clerk LLP

(56) References cited:
- US-A1- 2018 270 417
- US-A1- 2019 295 216

## Description

The present invention relates to an information processing method, carrier means, and an information processing apparatus.

### Description of the Related Art

Still images and videos are used to introduce and promote goods or facilities in industries such as tourism, real estate, used cars and weddings. Further, in recent years, in addition to still images taken by a general-purpose camera, wide-angle images such as spherical images are used that enhance the feeling of actually being there. Furthermore, contents created by combining the wide-angle images and the still images with text information are used for the promotion or introduction of goods or services as described above. As a technique of capturing the wide-angle images for creating such contents, a technique of using an application installed in an information terminal such as a smartphone in combination with a celestial-sphere camera is known.

"How to capture a 360° tour", [online], made public on July 19, 2016, YouTube, [searched on February 5, 2020], Internet <URL: https://youtu.be/BA3EaMNU_Cw?t=162> discloses a technique regarding generating contents using wide-angle images. The above video on the Internet discloses a technique of performing an operation of setting hot spots for switching scenes at desired locations in a wide-angle image, while a user is shooting photographs, in order to generate contents more efficiently.

However, according to well-known techniques, when creating contents by associating a still image with a wide-angle image, images captured by an external digital camera are to be copied to an information terminal and a desired image selected from an image folder in the information terminal is to be associated with the wide-angle image. Such capturing images with the external camera and copying the images to the information terminal take time and efforts. Further there is a possibility that an image wrongly selected from the image folder is associated with the wide-angle image, and therefore there is room for improvement.

US-A-2018270417 discloses an apparatus, system, and method, each of which: obtains a first image in a first projection, and a second image in a second projection; obtains area specification information specifying an area in the second image; and associates location information to be used for superimposing the second image on the first image with the area specification information, or generates location information based on the area specification information.

US-A-2019295216 discloses an information processing apparatus calculates a first corresponding area in a first image in first projection, corresponding to a second image in second projection, through first homography transformation; transforms a projection of a peripheral area including the first corresponding area to generate a peripheral area image; calculate a second corresponding area in the peripheral area image through second homography transformation; calculate a third corresponding area in the second image, corresponding to a third image in the second projection, through third homography transformation; reversely transform a projection of the second corresponding area to generate first location information based on a first specific corresponding area in the first image; calculate a fourth corresponding area in the peripheral area image through the second homography transformation; and reversely transform a projection of the fourth corresponding area to generate second location information based on a second specific corresponding area in the first image.

### SUMMARY

The invention provides an information processing method, carrier means, and apparatus according to claims 1, 8, and 9, respectively.

### BRIEF DESCRIPTION OF THE DRAWINGS

A more complete appreciation of the embodiments and many of the attendant advantages and features thereof can be readily obtained and understood from the following detailed description with reference to the accompanying drawings, wherein:
FIG. 1 is a schematic diagram illustrating an example of a configuration of a spherical image content creation system including an information terminal, according to an embodiment of the present invention;
FIG. 2 is a sectional view of a spherical imaging device, according to an embodiment of the present invention;
FIG. 3A is a diagram illustrating an example of a hardware configuration of the spherical imaging device, according to an embodiment of the present invention;
FIG. 3B is a diagram illustrating an example of a hardware configuration of the information terminal, according to an embodiment of the present invention;
FIG. 4 is a block diagram illustrating an example of a functional configuration relating to spherical image content creation of the information terminal, according to an embodiment of the present invention;
FIG. 5 is a flowchart illustrating a main operation of creating a spherical image content, performed by the information terminal, according to an embodiment of the present invention (1/2);
FIGs. 6A and 6B are flowcharts each illustrating a main operation of creating the spherical image content, performed by the information terminal, according to an embodiment of the present invention (2/2);
FIG. 7 is a flowchart illustrating an operation of registering a floor plan, performed by the information terminal, according to an embodiment of the present invention;
FIG. 8 is a diagram for describing how association with a position on the floor plan is performed, according to an embodiment of the present invention;
FIG. 9 is a flowchart illustrating an operation of registering the spherical image, performed by the information terminal, according to an embodiment of the present invention;
FIG. 10 is a diagram for describing how to associate an annotation with a position in the spherical image, according to an embodiment of the present invention;
FIG. 11 is a flowchart illustrating an operation of registering a normal image, performed by the information terminal, according to an embodiment of the present invention;
FIGs. 12A to 12F are diagrams illustrating a data structure in which a spherical image content generated by the information terminal is stored, according to an embodiment of the present invention;
FIG. 13 is a diagram illustrating a file structure when the spherical image content generated by the information terminal is exported, according to an embodiment of the present invention;
FIGs. 14A to 14D are diagrams, each illustrating an example of a screen displayed by the information terminal, according to an embodiment of the present invention;
FIGs. 15A to 15D are diagrams, each illustrating an example of a screen displayed by the information terminal, according to an embodiment of the present invention;
FIGs. 16A to 16D are diagrams, each illustrating an example of a screen displayed by the information terminal, according to an embodiment of the present invention;
FIGs. 17A to 17D are diagrams, each illustrating an example of a screen displayed by the information terminal, according to an embodiment of the present invention; and
FIGs. 18A to 18D are diagrams, each illustrating an example of a screen displayed by the information terminal, according to an embodiment of the present invention.

The accompanying drawings are intended to depict embodiments of the present invention and should not be interpreted to limit the scope thereof. The accompanying drawings are not to be considered as drawn to scale unless explicitly noted.

### DETAILED DESCRIPTION

In describing embodiments illustrated in the drawings, specific terminology is employed for the sake of clarity. However, the disclosure of this patent specification is not intended to be limited to the specific terminology so selected. Referring now to the drawings, wherein like reference numerals designate identical or corresponding parts throughout the several views thereof, embodiments of this disclosure are described. As used herein, the singular forms "a," "an," and "the" are intended to include the plural forms as well, unless the context clearly indicates otherwise. In embodiments, a description is given of an example in which an information processing apparatus is an information terminal that communicates with a spherical imaging device. Further, in embodiments, a description is given of an example in which a program executable by a computer implementing the information processing apparatus is an application program to be installed in the information terminal.

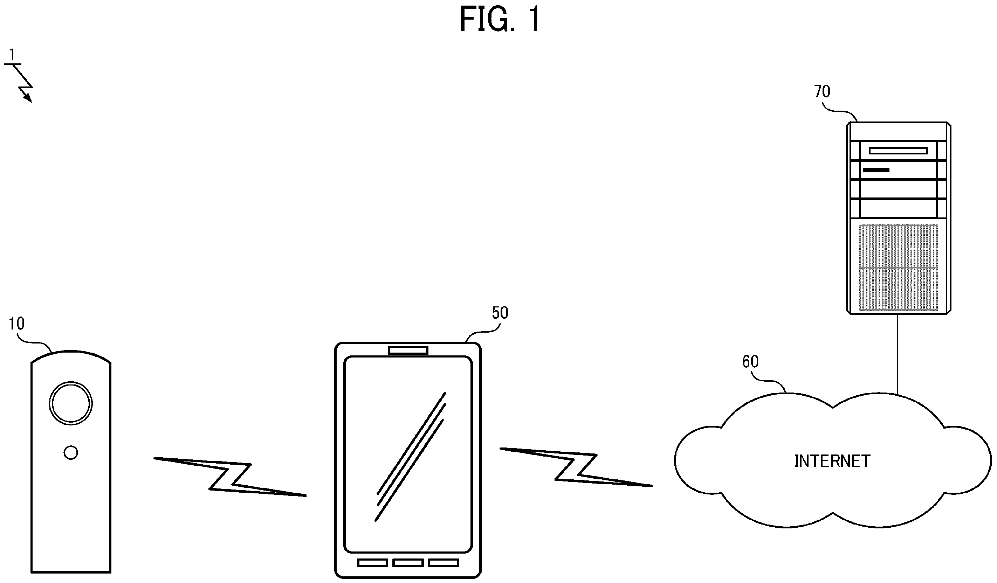

FIG. 1 is a schematic diagram illustrating an example of a configuration of a spherical image content creation system 1 including an information terminal 50, according to the present embodiment. The spherical image content creation system 1 illustrated in FIG. 1 includes a spherical imaging device 10 configured to capture a spherical image and the information terminal 50 communicable with the spherical imaging device 10.

Any suitable information terminal is used as the information terminal 50, and a mobile information terminal such as a smartphone, a tablet computer, or a laptop computer is preferable. In the information terminal 50, an application program is installed that controls the spherical imaging device 10 to capture a spherical image and creates content using the captured spherical image. The content created as above is hereinafter referred to as a "spherical image content". The information terminal 50 constitutes an information processing apparatus or a computer according to the present embodiment, which has a spherical image content creation function. Further, the information terminal 50 and the spherical imaging device 10 in combination constitute the spherical image content creation system 1.

In the embodiment illustrated in FIG. 1, the spherical imaging device 10 and the information terminal 50 are connected by, for example, a wireless connection such as a wireless local area network (LAN) or Bluetooth (registered trademark). An image in a predetermined format captured by the spherical imaging device 10 is transmitted to the information terminal 50 by wireless communication. The information terminal 50 creates the spherical image content using the received image with the spherical image content creation function. In another example, the spherical imaging device 10 and the information terminal 50 are connected with each other in any other way than the wireless connection as described above, such as a wired LAN or a universal serial bus (USB).

In the embodiment illustrated in FIG. 1, the information terminal 50 is further connected to the Internet 60 through a mobile communication network such as Long-Term Evolution (LTE) or 5G, or via a communication device such as an access point, a mobile router, or a broadband router.

In the embodiment illustrated in FIG. 1, a content publishing server 70 is provided on the Internet 60. The content publishing server 70 receives the spherical image content transmitted from the information terminal 50 and stores and manages the received spherical image content. Further, the content publishing server 70 receives a viewing request for the spherical image content from the information terminal 50 or other information terminal, and transmits the requested spherical image content to the request source information terminal. Thus, the spherical image content is viewed on a display device of the request source information terminal. For example, the content publishing server 70 is configured as a computer in an on-premises environment or a cloud environment.

In an example embodiment, the content publishing server 70 is configured as a web server or a web application server. In such embodiment, the content publishing server 70 receives a request for a content registration request including a spherical image content to be registered in accordance with HyperText Transfer Protocol (HTTP), stores the spherical image content in an appropriate storage area, and manages the content in a database, for example. The content publishing server 70 further receives a request for an image viewing request designating a spherical image content, reads the spherical image content as the request target, and transmits a response including the read content. The request source information terminal that receives the response makes the received spherical image content viewable on the display device using a web browser or a specific application. In the present embodiment, the content or the spherical image content is a collection of one or a plurality pieces of data as material. Examples of the material of this content or the spherical image content include, but are not limited to, a spherical image, a normal image, a spherical video, a normal video, text (characters), and sound. Although, in the embodiment, a description is given of an example in which a content is a spherical image content including at least a spherical image, in another example, instead of the spherical image, a content uses a wide-angle image other than the spherical image.

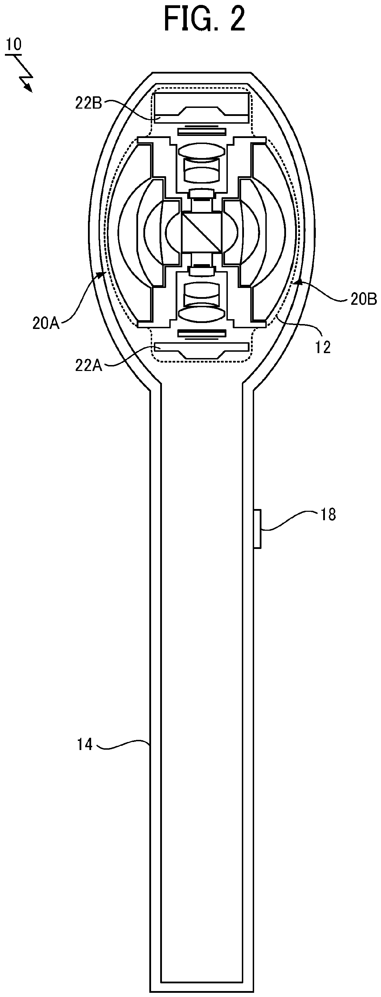

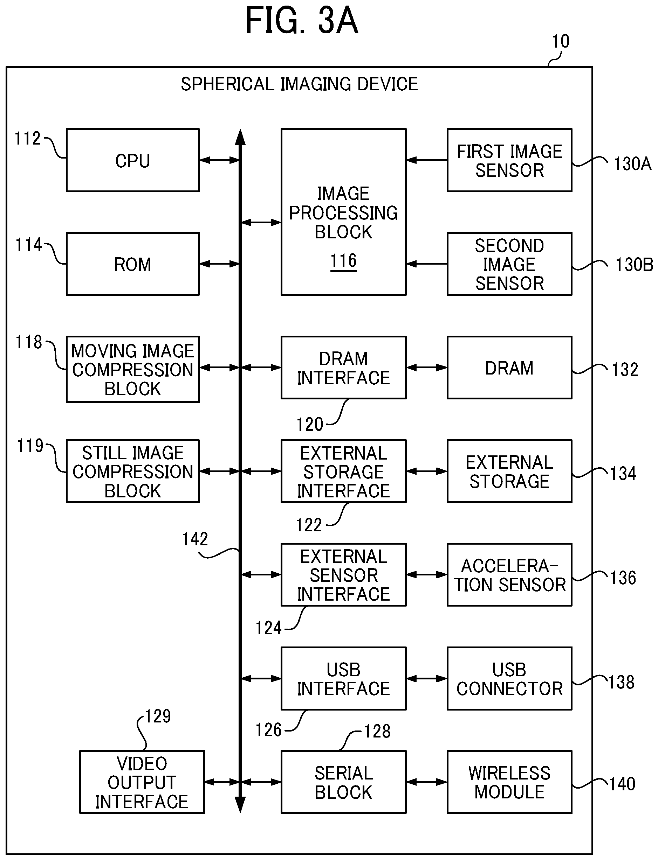

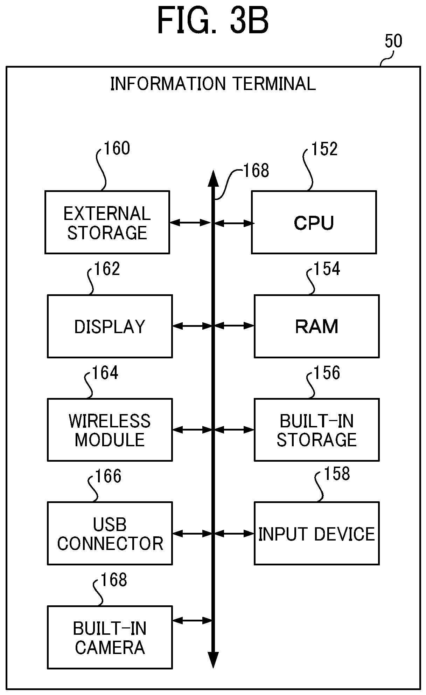

A description is now given of examples of configurations of the spherical imaging device 10 and the information terminal 50, according to the present embodiment, with reference to FIG. 2 and FIGs. 3A and 3B. FIG. 2 is a sectional view of the spherical imaging device 10, according to the present embodiment. The spherical imaging device 10 illustrated in FIG. 2 includes an imaging body 12, a casing 14 that holds the imaging body 12 and components such as a controller and a battery, and an operation button 18 provided on the casing 14.

The imaging body 12 illustrated in FIG. 2 includes two image forming optical systems 20A and 20B and two image sensors 22A and 22B. Each of the image sensors 22A and 22B is, for example, a charge-coupled device (CCD) sensor or a complementary metal oxide semiconductor (CMOS) sensor. Each of the image forming optical systems 20 is configured as a fisheye lens consisting of, for example, seven lenses in six groups. In the embodiment illustrated in FIG. 2, the fish-eye lens has a full angle of view of larger than 180 degrees (=360 degrees/n, where n denotes the number of optical systems and n is 2), preferably has an angle of view of 190 degrees or larger. The number of the image forming optical systems 20 and the image sensors 22 is any other suitable number, such as 3 or more.

The relative positions of the optical elements (lenses, prisms, filters, and aperture stops) of the two image forming optical systems 20A and 20B are defined with reference to the image sensors 22A and 22B. More specifically, positioning is made such that the optical axis of the optical elements of each of the image forming optical systems 20A and 20B is positioned at the central part of the light receiving area of corresponding one of the image sensors 22 orthogonally to the light receiving area, and such that the light receiving area serves as the imaging plane of corresponding one of the fisheye lenses.

In the embodiment illustrated in FIG. 2, the image forming optical systems 20A and 20B have the same specification, and are combined facing the opposite directions such that the optical axes thereof match with each other. The image sensors 22A and 22B convert the light distribution of the received light into an image signal, and sequentially output image frames to the image processing block on the controller.

As described below in detail, the images captured by the respective image sensors 22A and 22B are combined so as to generate an image over a solid angle of 4π steradian (hereinafter, such an image is referred to as a "spherical image"). The spherical image is obtained by capturing images of all directions that can be seen from an image capturing point. Although in the embodiments, a description is given of an example case in which a spherical image is preferably generated, in another example, a so-called panoramic image obtained by photographing 360 degrees only in a horizontal plane or an image that is a part of the image obtained by photographing omnidirectionally or 360 degrees in a horizontal plane is generated. The spherical image is either a still image or a moving image (movie).

FIG. 3A is a diagram illustrating an example of a hardware configuration of the spherical imaging device 10, according to the present embodiment. The spherical imaging device 10 includes a central processing unit (CPU) 112, a read only memory (ROM) 114, an image processing block 116, a moving image compression block 118, a still image compression block 119, a dynamic random access memory (DRAM) 132 connected via a DRAM interface 120, and an acceleration sensor 136 connected via an external sensor interface 124.

The CPU 112 controls operation of each of hardware components and overall operation of the spherical imaging device 10. The ROM 114 stores a control program described in a code readable by the CPU 112 and various kinds of parameters. The image processing block 116 is connected to a first image sensor 130A and a second image sensor 130B (corresponding to the image sensors 22A and 22B in FIG. 2, respectively), and receives image signals of images captured by the first image sensor and the second image sensor. The image processing block 116 includes, for example, an image signal processor (ISP), and performs, for example, shading correction, Bayer interpolation, white balance correction, and gamma correction on the image signals received from the first image sensor 130A and the second image sensor 130B. Further, the image processing block 116 combines a plurality of images obtained from the first image sensor 130A and the second image sensor 130B, to generate a spherical image as described above.

The moving image compression block 118 is a codec block configured to compress and decompress a video in a moving picture experts group (MPEG)-4 advanced video coding (AVC)/H.264 format, for example. The moving image compression block 118 is used to generate video data of the generated spherical image. The still image compression block 119 is a codec block configured to compressing and decompress a still image in a joint photographic experts group (JPEG) or tagged image file format (TIFF) format, for example. The still image compression block 119 is used to generate still image data of the generated spherical image. The DRAM 132 provides a storage area for temporarily storing data when performing various types of signal processing and image processing. The acceleration sensor 136 detects acceleration components of three axes, which are used to detect the vertical direction to perform zenith correction on the spherical image. The acceleration sensor 136 is just one example. In another example, in addition to the acceleration sensor, at least one of functions of a triaxial angular velocity sensor and an electronic compass is provided.

The spherical imaging device 10 further includes an external storage interface 122, a USB interface 126, a serial block 128, and a video output interface 129. The external storage interface 122 is connected to an external storage 134. The external storage interface 122 controls reading and writing of data from and to the external storage 134 such as a memory card inserted in a memory card slot.

The USB interface 126 is connected to a USB connector 138. The USB interface 126 controls USB communication with an external device such as the information terminal 50 or a personal computer connected via the USB connector 138. The serial block 128 controls serial communication with an external device such as the information terminal 50 or a personal computer, and is connected to a wireless module 140. The video output interface 129 is an interface to connect the spherical imaging device 10 to an external display such as a high-definition multimedia interface (HDMI, registered trademark), through which captured images are output to the external display as a video.

When the power is turned on by an operation to a power switch, the control program mentioned above is loaded to a main memory. The CPU 112 controls operation of each hardware component of the spherical imaging device 10 according to the control program loaded into the main memory, while temporarily saving data required for the control in the memory. Thus, the spherical imaging device 10 implements functional units and operations described below.

FIG. 3B is a diagram illustrating an example of a hardware configuration of the information terminal 50, according to the present embodiment. The information terminal 50 illustrated in FIG. 3B includes a CPU 152, a random access memory (RAM) 154, a built-in storage 156, an input device 158, an external storage 160, a display 162, a wireless module 164, a USB connector 166, and a built-in camera 168.

The CPU 152 controls operation of each of hardware components and overall operation of the information terminal 50. The RAM 154 provides a work area for the CPU 152. The built-in storage 156 stores an operating system and a control program, such as an application program that executes processes in the information terminal 50 according to the present embodiment, each of the operating system and the control program being written in codes interpretable by the CPU 152.

The input device 158 is an input device such as a touch screen, and provides a user interface. The input device 158 constitutes input means in the present embodiment. The external storage 160 is a removable storage medium mounted, for example, in a memory card slot, and records various types of data, such as image data in a video format and still image data. The wireless module 164 establishes a connection for wireless LAN communication between the information terminal 50 and an external device such as the spherical imaging device 10. The USB connector 166 establishes a USB connection between the information terminal 50 and an external device.

Although, a description given hereinafter is of an example in which the wireless module 164 is used as communication means that allows the information terminal 50 to communicate with the spherical imaging device 10, limitation to any specific standard is not intended. In another example, the connection to an external device is established through other wireless communication such as Bluetooth (registered trademark) or wireless USB, the USB connector 166, or through wired communication such as a wired LAN.

The display 162 displays an operation screen that accepts operation inputs from a user, displays a monitor image of an image captured by the spherical imaging device 10 that is ready to be captured or being captured, and displays a moving image or still image stored for playback or viewing. The display 162 and the input device 158 allows a user, through the operation screen, to make instructions for image capturing or changing various kinds of setting in the spherical imaging device 10. The display162 constitutes built-in display means in the present embodiment. In another example, the information terminal 50 further includes a video interface such as HDMI (registered trademark). In this example, the information terminal 50 outputs a screen to external display means such as a display device or a projector device via the video interface.

The built-in camera 168 is a standard camera that the information terminal 50 includes, which captures a normal still image or a moving image, to generate still image data and moving image data. The built-in camera 168 constitutes imaging means in the present embodiment.

When power is supplied to the information terminal 50 and the power thereof is turned on, the programs are read from the ROM 114 or the built-in storage 156, and loaded to the RAM 154. The CPU 152 controls operation of each hardware element of the information terminal 50 according to the programs loaded into the RAM 154, while temporarily saving data required for the control in the memory. Thus, the information terminal 50 implements functional units and operations described below. The above-mentioned application program is a program that causes a computer to operate as each means in the present embodiment. The above-mentioned program is installed in a computer, and the computer executes the installed program, thereby implementing the information terminal 50 according to the present embodiment.

The content publishing server 70 has the similar or substantially the similar hardware configuration as that of the information terminal 50 illustrated in FIG. 3B, and redundant description thereof is omitted below, in order to simplify the description. In addition, any other suitable hardware components are added, deleted, or changed to, from, or in the content publishing server 70 as appropriate according to the intended use.

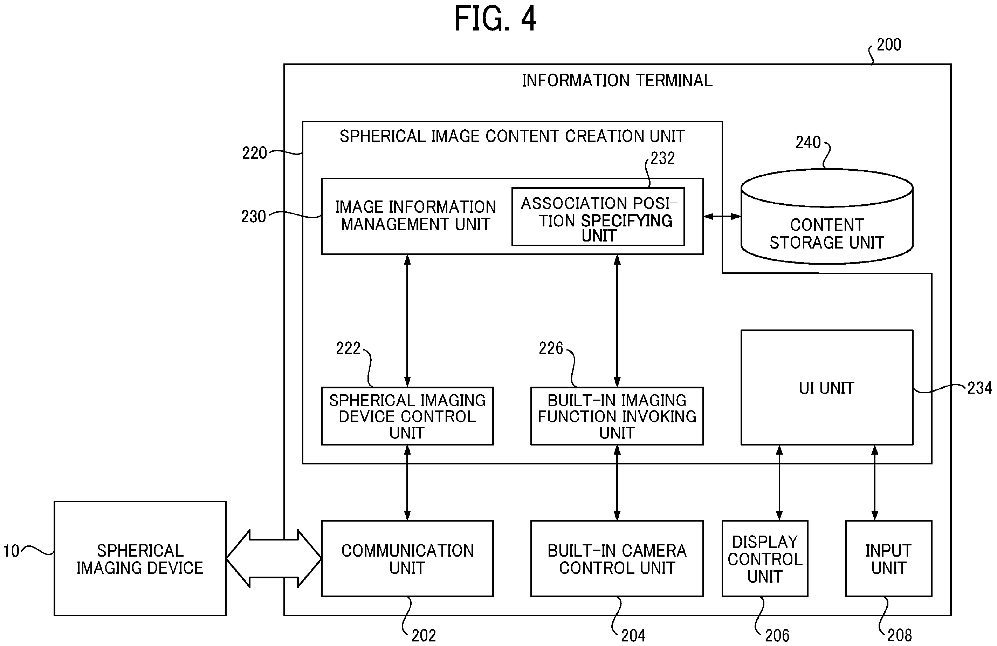

A detailed description is now given of the spherical image content creation function, according to the present embodiment, with reference to FIG. 4. FIG. 4 is a block diagram illustrating an example of a functional configuration relating to spherical image content creation of the information terminal 50, according to the present embodiment.

As illustrated in FIG. 4, a functional block 200 of the information terminal 50 includes a communication unit 202, a built-in camera control unit 204, a display control unit 206, an input unit 208, a spherical image content creation unit 220, and a content storage unit 240.

The communication unit 202 controls the wireless module 164, which is an interface with an external device, to perform communication with the spherical imaging device 10. The built-in camera control unit 204 controls the built-in camera 168 as the imaging means.

The display control unit 206 controls the display 162 as the display means. The input unit 208 controls the input device 158 as the input means.

In a preferable example embodiment, the spherical image content creation unit 220 is provided as an application that integrates a function of controlling the spherical imaging device 10 to capture a spherical image and an imaging function of the built-in camera 168 of the information terminal 50, and collectively manages plural types of images (e.g., a spherical image and a normal image) captured with these functions.

The spherical image content creation unit 220 includes a spherical imaging device control unit 222, a built-in imaging function invoking unit 226, an image information management unit 230, and a user interface (UI) unit 234.

The spherical imaging device control unit 222 controls the spherical imaging device 10 as an extraneous source via the communication unit 202. The spherical imaging device control unit 222 issues commands to the spherical imaging device 10 to control the spherical imaging device 10 to capture a spherical image and transmit the captured spherical image to the information terminal 50. Further, the spherical imaging device control unit 222 acquires a spherical image from the spherical imaging device 10 via the communication unit 202. The spherical imaging device control unit 222 constitutes external device control means and first acquisition means in the present embodiment. The spherical image is either a still image or a moving image (movie). A description is given hereinafter basically is of an example in which the spherical image is a still image.

The built-in imaging function invoking unit 226 invokes an imaging function of the built-in camera 168 by using the built-in camera control unit 204. Further, the built-in imaging function invoking unit 226 acquires an image captured by the built-in camera 168 from the built-in camera control unit 204. The built-in imaging function invoking unit 226 constitutes invoking means and second acquisition means in the present embodiment.

There are three example implementation ways for directly or indirectly controlling the built-in camera 168 from the application. The first example way is to invoke a camera application itself for capturing an image using the built-in camera 168. The second example way is to invoke a camera function for capturing an image using the built-in camera 168. The third example way is to implement a function itself for controlling the built-in camera 168 in the spherical image content creation unit 220. From the viewpoint of user operability, the second and third example ways are preferable. However, both implementation ways have a common feature of controlling the built-in camera 168 directly or indirectly from the application.

Further, the configuration illustrated in FIG. 4 supports any of the above three ways, and the built-in imaging function invoking unit 226 invokes the built-in camera control unit 204 as a camera function and invokes the imaging function of the built-in camera 168. However, no limitation is intended thereby.

Although in the embodiment, a description is given of an example in which a normal still image (also referred to as a "still image") is acquired as an image captured by the built-in camera 168, in another example the image captured by the built-in is a moving image. Further, in the embodiment, in a case in which a spherical image is in an image folder (camera roll), the built-in camera 168 can be used to capture a normal image.

The image information management unit 230 manages a spherical image acquired by the spherical imaging device control unit 222 in association with a normal image acquired from the built-in imaging function invoking unit 226. Thus, the image information management unit 230 stores a spherical image content in the content storage unit 240. The spherical image content includes one or more spherical images and one or more captured images. The image information management unit 230 constitutes associating means in the present embodiment. In another example, in addition to or in alterative to storing the spherical image content in the content storage unit 240, the image information management unit 230 transmits (so-called uploads) the created spherical image content to the content publishing server 70 as an extraneous source to register the transmitted content therein.

The image information management unit 230 illustrated in FIG. 4 includes an association position specifying unit 232. The association position specifying unit 232 specifies a particular position in a spherical image captured by the spherical imaging device 10 as an association destination to which the normal image or the like is associated. The association position specifying unit 232 constitutes position specifying means in the present embodiment.

In an example embodiment, the association position specifying unit 232 specifies a central area of a display area of the spherical image when displayed on the display 162 as the particular position in the spherical image. In another example embodiment, the association position specifying unit 232 specifies a designated area designated by an input to the input device 158 in the display area when the spherical image is displayed on the display 162 as the particular position in the spherical image.

In another example, in addition to associating the normal image with the particular position in the spherical image, the image information management unit 230 associates the normal image with a content including the spherical image, the content being a higher-level unit than the spherical image. Further, in addition to the normal image acquired by the built-in imaging function invoking unit 226, the image information management unit 230 can manage other images in association with the spherical image or the content. For example, the image information management unit 230 manages either one or both of images stored in the built-in storage 156 of the information terminal 50 or the external storage 160 and images acquired from extraneous sources such as images received from an image management system (e.g., the content publishing server 70 or another service) communicable with the information terminal 50, in association with the spherical image or the content. Furthermore, the image information management unit 230 can also manage a second spherical image in association with a particular position of a first spherical image. Moreover, in this case, the image information management unit 230 can manage the first spherical image in association with a particular position of the second spherical image.

The UI unit 234 manages the transition of screens relating to spherical image content creation, and provides a graphical user interface (GUI) such as a screen and buttons constituting the screen. The UI unit 234 constitutes first providing means in the present embodiment for providing a first instruction unit as a GUI component that receives an instruction for controlling the spherical imaging device 10 to perform imaging. Further, the UI unit 234 constitutes second providing means in the present embodiment for providing a second instruction unit as a GUI component that receives an instruction for invoking the imaging function of the built-in camera 168.

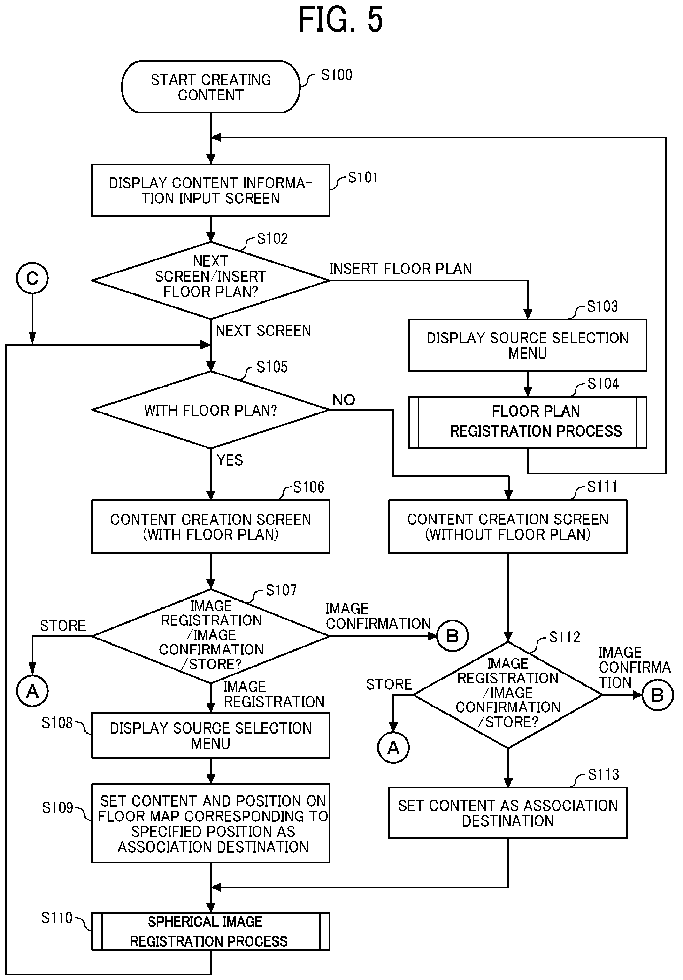

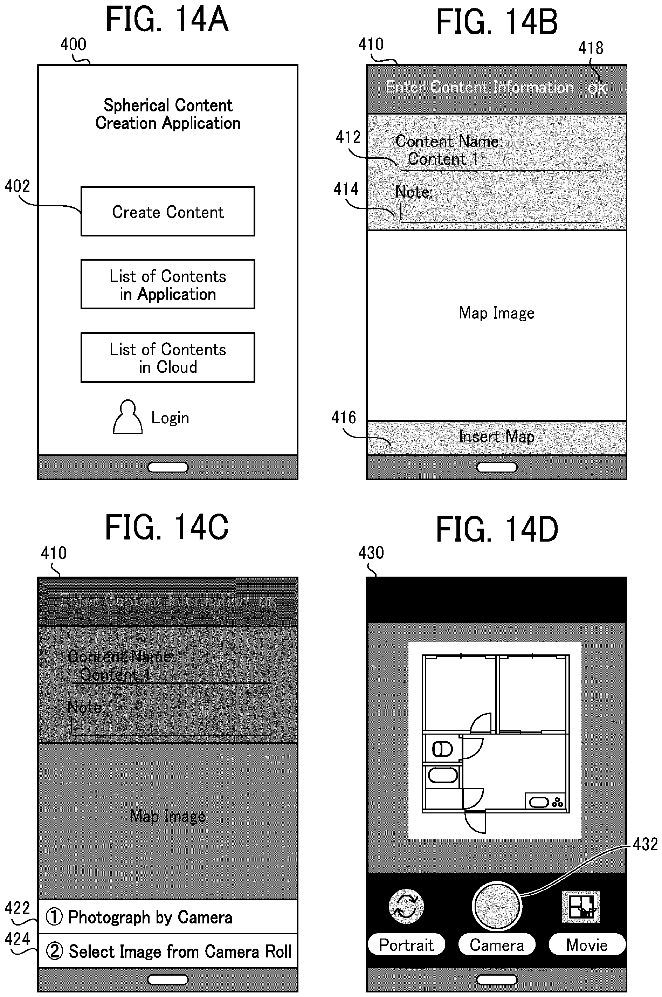

A detailed description is now given of an operation of creating a spherical image content, according to the present embodiment, with reference to FIG. 5 to FIGs. 18A to 18D. FIG. 5, FIGs. 6A and 6B, FIG. 7, FIG. 9 and FIG. 11 are flowcharts, each illustrating an operation of creating a spherical image content performed by the information terminal 50, according to the present embodiment. Note that in FIG. 5, FIGs. 6A and 6B, FIG. 7, FIG. 9 and FIG. 11, main processes relating to associating a plurality of types of images, according to the present embodiment, and the descriptions of processes relating to other functions and exception handling are omitted. FIGs. 14A to 14D to FIGs. 18A to 18D are diagrams, each illustrating an example of a screen displayed on the display 162 of the information terminal 50, according to the present embodiment.

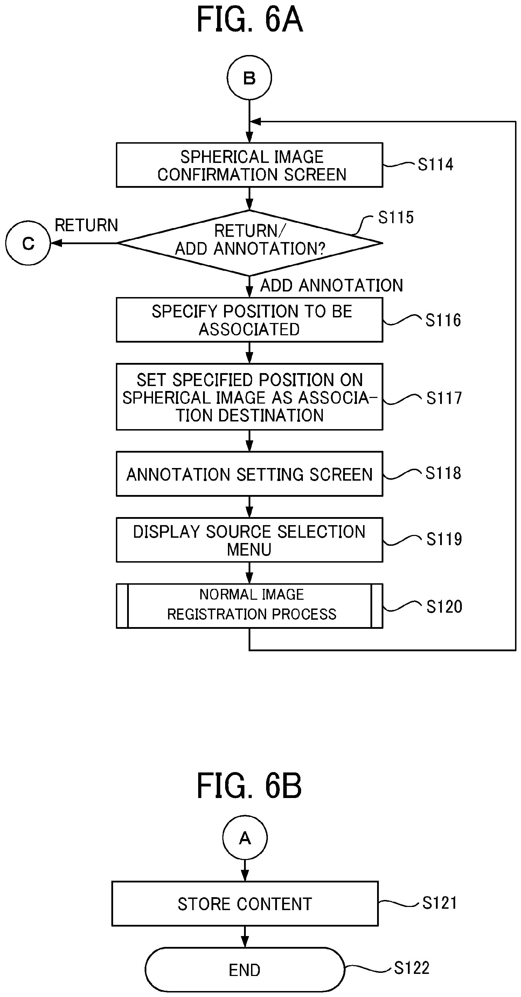

FIG. 14A illustrates an example of a top screen 400 of a spherical image content creation application. The top screen 400 illustrated in FIG. 14A, includes a "Create Content" button 402 for starting the creation of a spherical image content. The operation illustrated in FIG. 5 and FIGs. 6A and 6B starts from step S100 of FIG. 5 in response to a user operation of tapping the "Create Content" button 402 on the top screen 400 illustrated in FIG. 14A, for example.

In step S101, the information terminal 50 displays a content information input screen 410 illustrated in FIG. 14B. The content information input screen 410 illustrated in FIG. 14B allows a user to enter information relating to a content such as a content name and desired alphanumeric characters indicating the content by using a text box 412 and a text box 414, for example. The content information input screen 410 further includes a " Insert Map" button 416 for inserting a floor plan. The user taps the "Insert Map" button 416 to invoke a process of inserting an image of a particular floor plan into the content. The content information input screen 410 further includes an "OK" button 418 for finishing the input of the basic information of the content and proceeding to the next operation of creating items in the content.

In step S102, the information terminal 50 branches the operation depending on an instruction received from the user on the content information input screen 410 illustrated in FIG. 14B. When the information terminal 50 determines in step S102 that the "Insert Map" button 416 is tapped and thereby an instruction for inserting a floor plan (insert floor plan) is received, the operation proceeds to step S103.

In step S103, as illustrated in FIG. 14C, the information terminal 50 displays a source selection menu that receives a selection of a source from which the floor plan is to be acquired. The source selection menu includes a "Photograph by Camera" button 422 and a "Select Image from Camera Roll" button 424. The "Photograph by Camera" button 422 allows the user, when selected, to select the built-in camera 168 as the source. The "Select Image from Camera Roll" button 424 allows the user, when selected, to select an image folder in the information terminal 50 as the source. In response to tapping either one of the buttons, the operation proceeds to step S104.

Although in the embodiment, the description given is of an example in which the content information input screen 410 illustrated in FIG. 14C includes "Photograph by Camera" button 422 and the "Select Image from Camera Roll" button 424, in another example, any other suitable button is provided such as a button for selecting an external image management system on a network as the source.

In step S104, the information terminal 50 performs a floor plan registration process. The floor plan is a base image to which spherical images are to be associated in the application. In the present embodiment, the floor plan (also referred to as a "floor map" or a "sketch drawing") is used as a base image as a base image associating the entire contents with each other. In another example, an image other than the floor plan is used as the base image. In still another example, no floor plan is provided, and the entire content is configured by two types of images, i.e., the spherical image and the normal image.

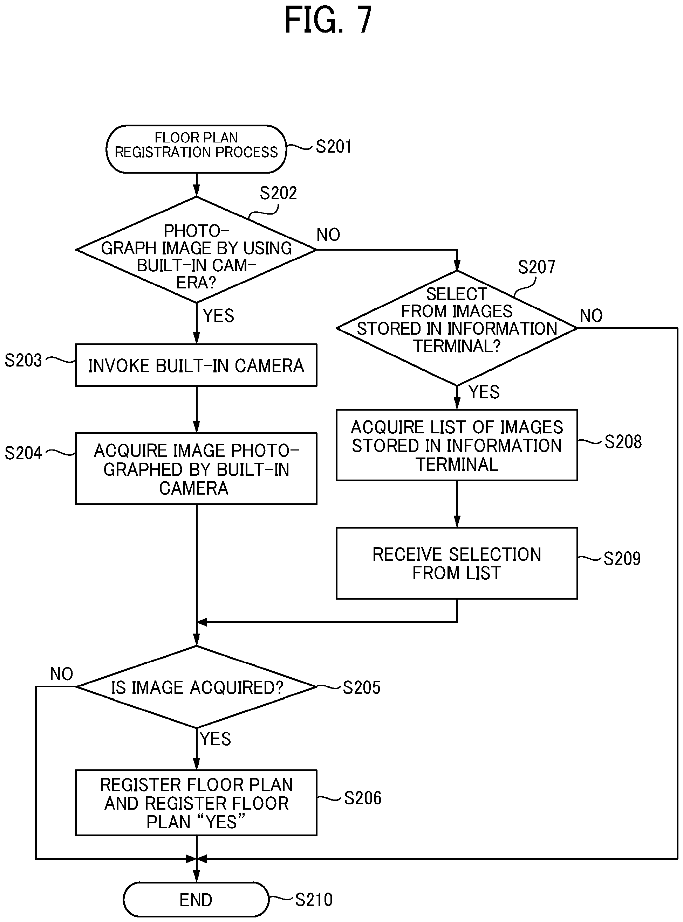

FIG. 7 is a flowchart illustrating an operation of registering the floor plan. The operation illustrated in FIG. 7 is invoked by the process of step S104 illustrated in FIG. 5 and starts from step S201. In step S202, the information terminal 50 determines whether imaging by the built-in camera 168 is selected. When the determination result in step S202 indicates that the "Photograph by Camera" button 422 is tapped in the source selection menu and therefore imaging by the built-in camera 168 is selected (S202: YES), the operation proceeds to step S203.

In step S203, the information terminal 50 invokes the built-in camera control unit 204 by the built-in imaging function invoking unit 226. FIG. 14D illustrates an imaging screen 430 for imaging a floor plan with the built-in camera, which is displayed in response to the invocation of the built-in camera control unit 204. When an imaging button 432 is tapped on the imaging screen 430 illustrated in FIG. 14D and thereby the execution of the imaging process is completed, the operation proceeds to step S204. In step S204, the information terminal 50 acquires a normal image captured by the built-in camera 168.

By contrast, when the determination result in step S202 indicates that imaging by the built-in camera is not selected (S202: NO), the operation proceeds to step S207. In step S207, the information terminal 50 determines whether the information terminal 50 is selected as the source. When the determination result in step S207 indicates that the "Select Image from Camera Roll" button 424 is tapped in the source selection menu and therefore the information terminal 50 is selected (S207: YES), the operation proceeds to step S208.

In step S208, the information terminal 50 reads a list of images stored in the information terminal 50 (e.g., in an image folder) and displays the list in a manner that a desired image is selected. In step S209, the information terminal 50 receives selection from the list of images stored in the information terminal 50, acquires the selected image. Then, the operation proceeds to step S205.

In step S205, the information terminal 50 determines whether the image is acquired (acquired by imaging, or acquired from the information terminal itself or an extraneous source). When the determination result indicates that the image is acquired (S205: YES), the operation proceeds to step S206. In step S206, the information terminal 50 registers the acquired image as a floor plan in association with the content, and records "with floor plan". In step S210, the operation returns to the operation of FIG. 5. Thus, control is returned to step S101, and the content information input screen 410 that is updated is displayed.

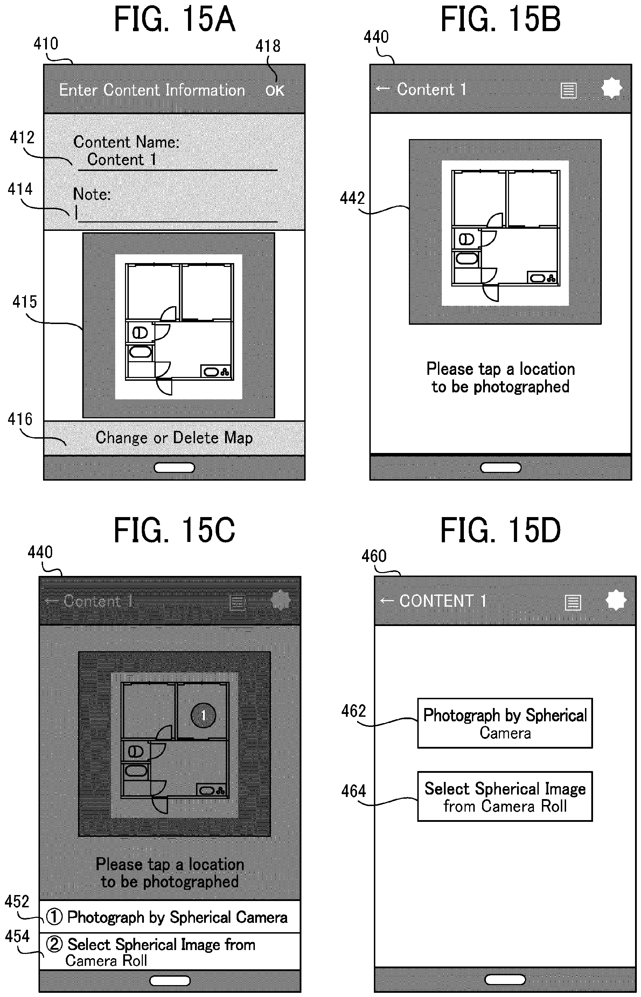

FIG. 15A illustrates the content information input screen 410 that is updated to reflect the registration of the floor plan. On the content information input screen 410 illustrated in FIG. 15A, an image 415 of the floor plan is newly displayed. Although in the embodiment, the description given is of an example in which the floor plan is an image captured by the built-in camera 168, i.e., an example in which the image of the floor plan is acquired by imaging a drawing at hand, such photograph is just an example of the floor plan. In another example, the floor plan is an image such as a drawing or an illustration drawn in advance. For example, such image is stored in an image folder (camera roll).

By contrast, when the determination result in step S205 indicates that no image is acquired (S205: NO), such as when no imaging is performed or when no selection of the desired image is performed, the operation proceeds to S210 and returns to the operation of FIG. 5. Further, when the determination result in step S207 indicates that no source is selected, such as when an area other than the "Photograph by Camera" button 422 and "Select Image from Camera Roll" button 424 is tapped in the source selection menu (S207: NO), the operation proceeds to step S210, and returns to the operation of FIG. 5. In another example, the source selection menu is configured so that an image is acquired from an extraneous source such as an image management system (e.g., the content publishing server 70 or another service) communicable with the information terminal 50, in addition to the "Photograph by Camera" button 422 and the "Select Image from Camera Roll" button 424.

Referring again to FIG. 5, in step S102, when the information terminal 50 determines that an instruction for proceeding to the next process of creating items of the content is received in response to tapping of the "OK" button 418 on the content information input screen 410 illustrated in FIG. 14B or FIG. 15A (S102: NEXT SCREEN), the operation proceeds to step S105.

In step S105, the operation by the information terminal 50 branches depending on the presence or absence of the floor plan. When the determination result in step S105 indicates that the floor plan is registered (S105: YES), the operation proceeds to step S106.

In step S106, the information terminal 50 displays a content creation screen (with floor plan) 440 to register a spherical image in association with a position on the floor plan. In step S107, the operation by the information terminal 50 branches depending on an instruction received from the user on the content creation screen (with floor plan) 440. When the floor plan is registered and no spherical image is registered yet, the content creation screen (with floor plan) 440 is in the state as illustrated in FIG. 15B.

The content creation screen (with floor plan) 440 illustrated in FIG. 15B includes a display area 442 in which an image of the floor plan is displayed. In response to detection of position designation operation such as tapping by a user, the display area 442 is configured to acquire the coordinates of a position on the display area 442 corresponding to the position designation operation. Optionally, the image of the floor plan displayed in the display area 442 is enlarged or reduced in response to an operation such as a pinch.

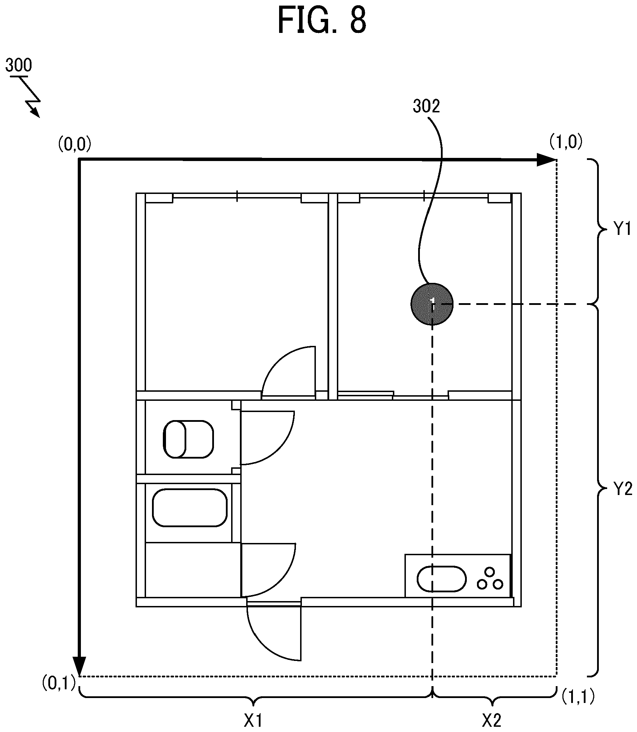

FIG. 8 is a diagram for describing how association with the position on the floor plan is performed. The display area 442 is displayed on the display in a predetermined size, and the image of the floor plan is arranged in the display area 442 at a predetermined scale. Therefore, a designated position 302 in the display area 442 is converted from a relative position (X1/(X1+X2), Y1/(Y1+Y2)) as illustrated in FIG. 8 to coordinates on the image of the floor plan. When the display area 442 is, for example, tapped on the content creation screen (with floor plan) 440, a coordinate value on the image of the floor plan corresponding to the designated position at which the operation is performed in the display area 442 is identified, and thereby an instruction for registering a spherical image at the identified position is received. Although in FIG. 8, the upper left corner is set as the origin and the coordinate value is in the range of 0 to 1, this is just one example. The origin is set in any other suitable way and the coordinate value is in any other suitable range.

In the content creation screen (with floor plan) 440 displayed in step S106, a function to "save" a content and a function to confirm a registered spherical image in the content ("image confirmation") can be invoked, in addition to the registration of the spherical image ("image registration"). However, when no spherical image is registered yet, a GUI component for the "image confirmation" is not displayed. On the other hand, a GUI component to "save" a content may be displayed so that the content can be temporarily saved.

When the determination result in step S107 indicates that an instruction for "image registration" is received on the content creation screen (with floor plan) 440, the operation proceeds to step S108. In step S108, the information terminal 50 displays the source selection menu illustrated in FIG. 15C. The source selection menu includes a "Photograph by Spherical Camera" button 452 and a "Select Spherical Image from Camera Roll" button 454. The "Photograph by Spherical Camera" button 452 allows the user, when selected, to select the spherical imaging device 10, which is external to the information terminal 50, as a source from which a spherical image to be registered is be acquired. The "Select Spherical Image from Camera Roll" button 454 allows the user, when selected, to select an image folder in the information terminal 50, as a source of a spherical image to be registered. In response to tapping either one of the buttons, the operation proceeds to step S109. The "Photograph by Spherical Camera" button 452 constitutes the first instruction unit in the present embodiment.

In step S109, the information terminal 50 sets the content and the position coordinate value on the image of the floor plan corresponding to the designated position as an association destination to which the spherical image is to be registered. In step S110, the information terminal 50 performs a spherical image registration process.

By contrast, when the determination result in step S105 indicates that no floor plan is registered (S105: NO), the operation proceeds to step S111. In step S111, the information terminal 50 displays a content creation screen (without floor plan) 460. In step S112, the operation by the information terminal 50 branches depending on an instruction received from the user on the content creation screen (without floor plan) 460. When no floor plan is registered and no spherical image is registered yet, the content creation screen (without floor plan) 460 is in the state as illustrated in FIG. 15D. The content creation screen (without floor plan) 460 illustrated in FIG. 15D includes the "Photograph by Spherical Camera" button 462 and "Select Spherical Image from Camera Roll" button 464, in substantially the same manner as the screen illustrated in FIG. 15C. In response to tapping either one of the buttons, an instruction for registering a spherical image ("image registration") is received, and the operation proceeds to step S112.

In the content creation screen (without floor plan) 460 displayed in step S111, a function to "save" a content and a function to confirm a registered spherical image in the content ("image confirmation") can be invoked, in addition to the registration of the spherical image ("image registration"). Although in a state in which no spherical image is registered yet, a GUI component for the "image confirmation" is not displayed, a GUI component to "save" the content may be displayed for temporary storage.

When the determination result in step S112 indicates that an instruction for "image registration" is received on the content creation screen (without floor plan) 460, the operation proceeds to step S113. In step S113, the information terminal 50 sets the content itself as an association destination with which a spherical image to be captured is to be associated. In step S110, the information terminal 50 performs the spherical image registration process.

In the embodiment, the description given is of an example in which the screen illustrated in FIG. 15C includes only the "Photograph by Spherical Camera" button 452 and the "Select Spherical Image from Camera Roll" button 454, and the screen illustrated in FIG. 15D includes only the "Photograph by Spherical Camera" button 462 and the "Select Spherical Image from Camera Roll" button 464. In another example, the screen includes a button for selecting, as the source, a spherical image that is already captured and stored in the spherical imaging device 10 but not transferred yet, or a button for selecting, as the source, a spherical image stored in an external image management system on a network.

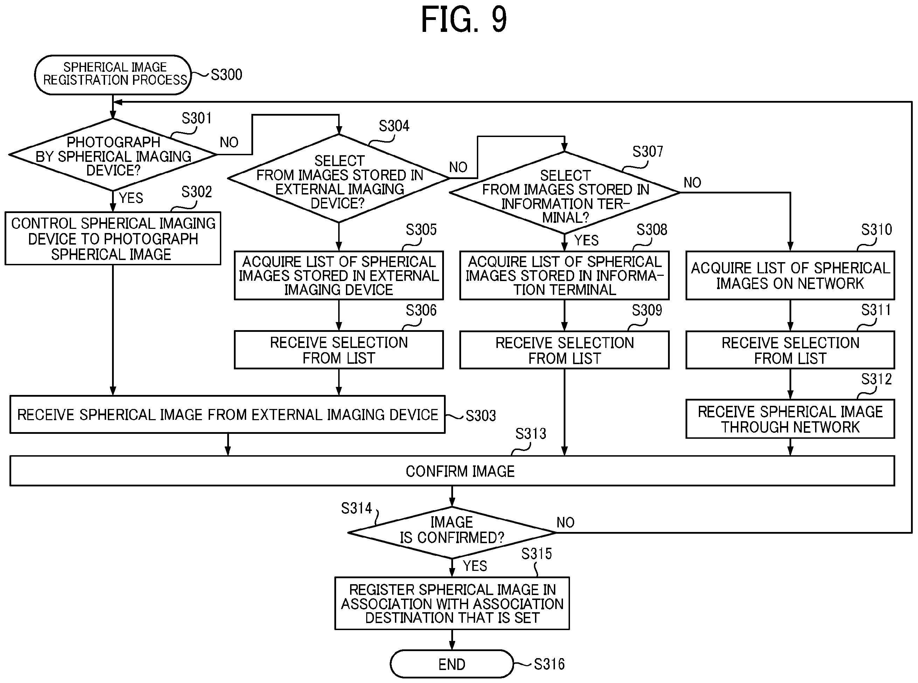

FIG. 9 is a flowchart illustrating an operation of registering a spherical image. The operation illustrated in FIG. 9 is invoked by the process of step S110 illustrated in FIG. 5 and starts from step S300. In step S301, the information terminal 50 determines whether imaging by the spherical imaging device 10, which is external to the information terminal, is designated When the determination result in step S301 indicates that imaging by the spherical imaging device 10 is selected (S301: YES), as the "Photograph by Spherical Camera" button 452 of the source selection menu is tapped on the content creation screen (with floor plan) 440 illustrated in FIG. 15C, or as the "Photograph by Spherical Camera" button 462 is tapped on the content creation screen (without floor plan) 460 illustrated in FIG. 15D, the operation proceeds to step S302.

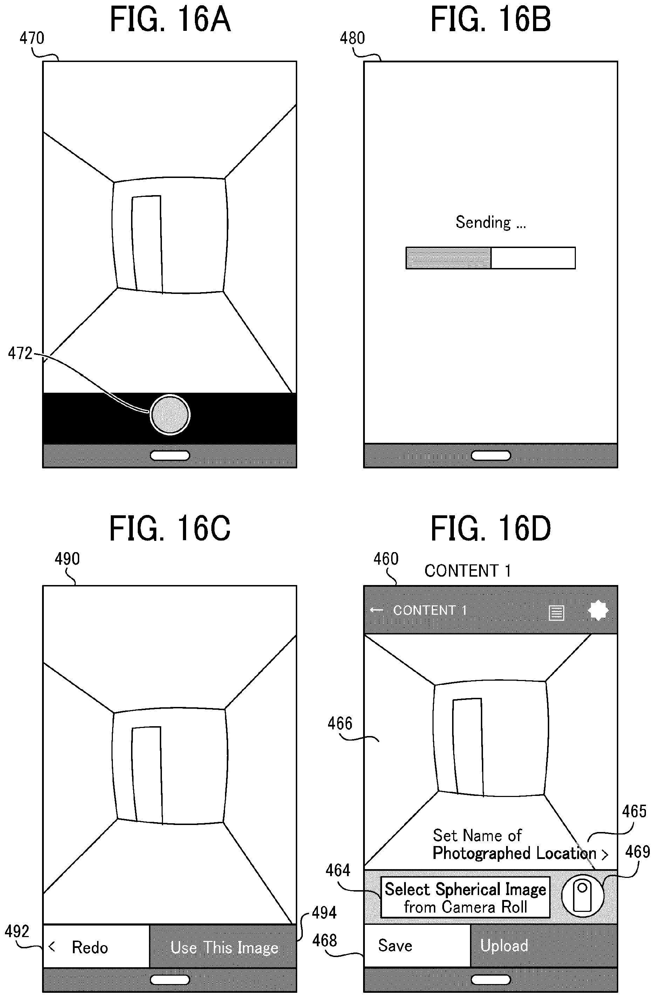

In step S302, the information terminal 50 controls the spherical imaging device 10 by the spherical imaging device control unit 222 to capture a spherical image. FIG. 16A illustrates a spherical imaging screen 470 for capturing an image by the spherical imaging device 10. When the imaging button 472 is tapped on the spherical imaging screen 470, an imaging command is issued from the spherical imaging device control unit 222 to the spherical imaging device 10 via the communication unit 202. In response to the imaging command, the spherical imaging device 10 performs imaging operation. When the imaging is completed, an image transfer to the information terminal 50 is started. FIG. 16B illustrates a transfer screen 480 indicating that the spherical image is being transferred from the spherical imaging device 10 to the information terminal 50. In step S303, the information terminal 50 acquires the spherical image transferred from the spherical imaging device 10, which is an external imaging device, by the spherical imaging device control unit 222, and the operation proceeds to step S313.

By contrast, when the determination result in step S301 indicates that imaging by the spherical imaging device 10 is not selected (S301: NO), the operation proceeds to step S304. In step S304, the information terminal 50 determines whether a captured image stored in the spherical imaging device 10, which is an external imaging device, is selected as the source. When the determined result in step S304 indicates that the captured image stored in the spherical imaging device 10 is selected as the source (S304: YES), the operation proceeds to

### step S305.

In step S305, the information terminal 50 acquires a list of spherical images that have been captured (and has not been transferred to the information terminal 50 yet) from the spherical imaging device 10 by the spherical imaging device control unit 222, and displays the list in a manner that a desired spherical image is selected. In step S306, the information terminal 50 receives a selection of a particular image from the list of the spherical images stored in the spherical imaging device 10. In step S303, the information terminal 50 receives the selected spherical image from the spherical imaging device 10, and the operation proceeds to step S313.

By contrast, when the determination result in step S304 indicates that a captured image stored in the spherical imaging device 10, which is an external imaging device, is not selected as the source (S304: NO), the operation proceeds to step S307. The determination in step S304 is performed in a case in which the menu illustrated in FIG. 15C and the content creation screen (without floor plan) 460 illustrated in FIG. 15D includes a button for selecting a captured spherical image (and not transferred to the information terminal 50 yet) stored in the spherical imaging device 10 as the source. However, in another example, such process is omitted. In this case, the operation proceeds directly to step S307.

In step S307, the information terminal 50 determines whether images stored in the information terminal 50 are selected as the source. When the determination result in step S307 indicates that the images stored in the information terminal 50 are selected as the source (S307: YES), the operation proceeds to step S308.

In step S308, the information terminal 50 reads out a list of spherical images stored in the information terminal 50. A format of a spherical image is same as that of a general-purpose image, such as JPEG. Further, to an image, information for identifying whether the image is a spherical image is attached as meta information. For example, when a user selects an image other than a spherical image, the information terminal 50 prompts the user to select a different image, based on this meta information. In another example, based on the meta information, the information terminal 50 displays, from the acquired list of images, spherical images, and other normal captured images in a manner that two types of images are distinguishable. In still another example, the information terminal 50 extracts only spherical images in advance based on the meta information and include the extracted spherical images in the list to be displayed. Further, it is assumed that spherical images that have already been captured and has been acquired are stored in the information terminal 50. In step S309, the information terminal 50 receives a selection of a particular spherical image from the list of the spherical images stored in the information terminal 50, and reads the selected image. Then, the operation proceeds to step S313.

By contrast, when the determination result in step S307 indicates that images stored in the information terminal 50 are not selected as the source (S307: NO), the operation proceeds to step S310. In step S310, the information terminal 50 acquires a list of spherical images from an image management system (e.g. the content publishing server 70) communicable with the information terminal 50 via a network. It is assumed that spherical images that have already been captured have been uploaded to the image management system. In step S311, the information terminal 50 receives a selection of a particular spherical image from the list of the spherical images stored in the image management system, and in step S312, receives the selected spherical image via the network. Then, the operation proceeds to step S313.

The processes from step S310 to step S312 are performed in a case in which the source selection menu illustrated in FIG. 15C and the content creation screen (without floor plan) 460 illustrated in FIG. 15D includes a button for selecting an image management system on the network as the source. However, in another example, such processes are omitted. In this case, the operation proceeds directly to step S316.

In step S313, the information terminal 50 displays a screen for confirming a spherical image to be used. In step S314, the information terminal 50 determines whether the spherical image to be used is confirmed. FIG. 16C illustrates a spherical image confirmation screen 490 for confirming the spherical image. The spherical image confirmation screen 490 includes a button 494 for confirming the use of the spherical image that is currently displayed and a button 492 for redoing the imaging or the selection.

When the determination result in step S314 indicates that the image is confirmed (S314: YES), as the button 494 is tapped on the spherical image confirmation screen 490, the operation proceeds to step S315. In step S315, the information terminal 50 registers the content by associating the confirmed spherical image with the association destination that is set in step S109 or S113 of FIG. 5. In step S316, the operation returns to the operation of FIG. 5. Note that the registration of this association destination can be moved to a desired position afterwards. By contrast, when the determination result in step S314 indicates that the redo is designated (S314: NO), as the button 492 is tapped on the spherical image confirmation screen 490 illustrated in FIG. 16C, the operation returns to step S301. Although the description given is of an example in which the redo process is performed in a state where the same source is selected, in another example the redo process is performed from the selection of the source.

When the spherical image registration process illustrated in FIG. 9 ends, the operation returns to step S105 again, and the content creation screen that is updated is displayed in step S106 or step S111.

FIG. 16D illustrates the content creation screen updated in step S111 in a state in which no floor plan is registered and one spherical image is registered.

The content creation screen (without floor plan) 460 illustrated in FIG. 16D includes a display area 466 in which the spherical image is displayed and a "Save" button 468 for saving the content. The display area 466 includes, a GUI component 465 for invoking a screen for entering information indicating a place where the spherical image is captured. The content creation screen (without floor plan) 460 further includes, the "Select Spherical Image from Camera Roll" button 464 and an icon 469 for photographing with the spherical imaging device.

The display area 466 of a particular spherical image is a GUI component for invoking confirmation of a registered spherical image ("image confirmation"). The "Save" button 468 is a GUI component for invoking a content saving process. As one or more spherical images are registered, "image confirmation" is displayed, and the GUI component of "save" of the content is displayed as needed.

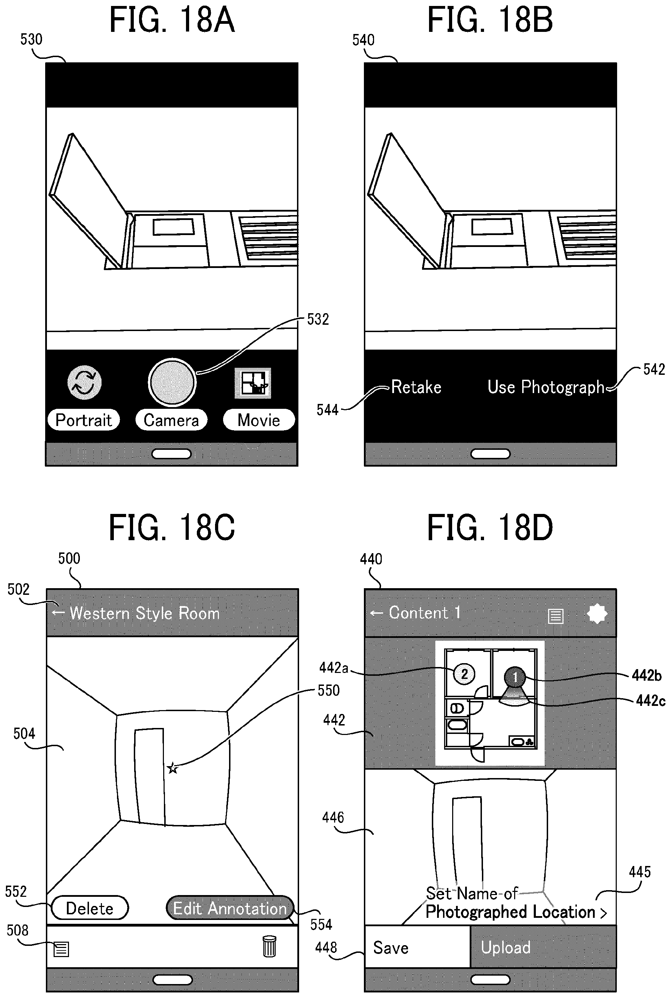

FIG. 18D illustrates the content creation screen updated in step S106 in a state in which a floor plan is registered and two spherical images are registered.

The content creation screen (with floor plan) 440 illustrated in FIG. 18D includes the display area 442 of a floor plan above a display area 446 in which a spherical image that similar to the content creation screen (without floor plan) 460 illustrated in FIG. 16D. Note that FIG. 18D illustrates a state in which two spherical images are registered respectively in association with two positions on the floor plan. A marker 442a and a marker 442b are attached respectively to two positions on the display area 442 of the floor plan. More specifically, FIG. 18D illustrates a state in which a spherical image corresponding to the marker 442b at a position indicated by "1" among the two marker 442a and marker 442b is selected.

In the display area 446, the spherical image currently being selected is displayed. The display area 446 further includes a GUI component 445 for invoking a screen for entering information indicating a place where the spherical image is captured. Further, an icon 442c having a fan shape indicating an angle at which the spherical image is being displayed is superimposed on the display area 442 of the floor plan. The display area 446 of the spherical image is a GUI component for invoking confirmation ("image confirmation") of the spherical image that is registered and currently being selected. The content creation screen (with floor plan) 440 illustrated in FIG. 18D includes a "Save" button 448 in substantially the same manner as the content creation screen illustrated in FIG. 16D.

Hereinafter, a description is given of an embodiment in which a normal image as an annotation is added to a spherical image using the content creation screen (without floor plan) 460 illustrated in FIG. 16D. However, as indicated above, the similar or substantially the similar operation is performed using the content creation screen (with floor plan) 440.

When the display area 466 corresponding to a particular spherical image is tapped on the content creation screen (without floor plan) 460 illustrated in FIG. 16D, the information terminal 50 receives an instruction for "image confirmation". When the determination result in step S107 or step S112 indicates that the "image confirmation" is accepted on the content creation screen (with floor plan) 440 or the content creation screen (without floor plan) 460, the operation proceeds to step S114 illustrated in FIG. 6A via a point B illustrated in FIG. 5.

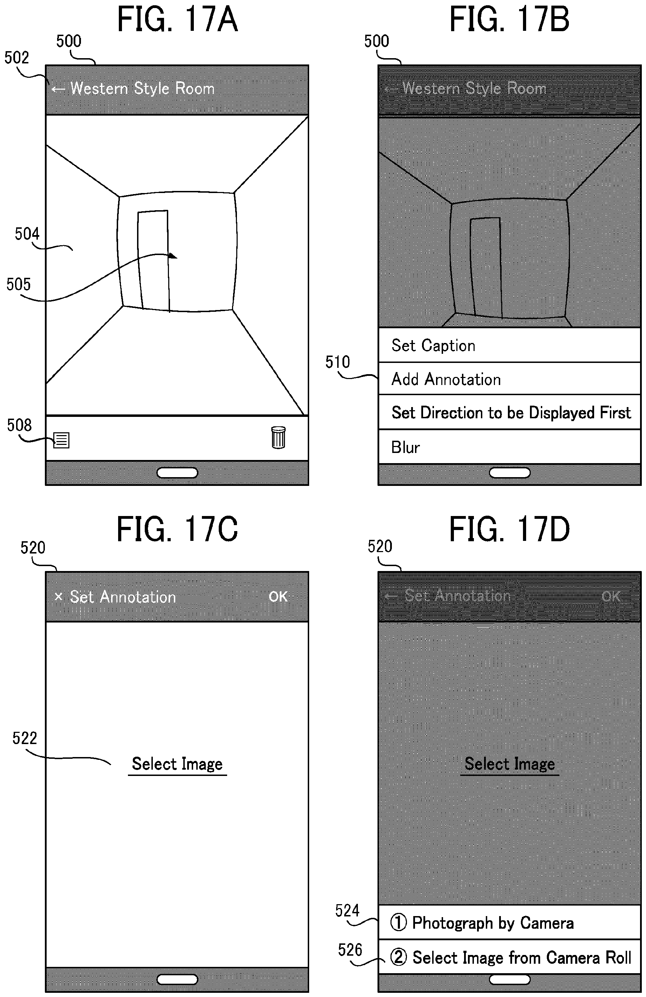

In step S114, the information terminal 50 displays an image confirmation screen 500 as illustrated in FIG. 17A, the screen allowing a user to confirm a designated spherical image. The image confirmation screen 500 illustrated in FIG. 17A includes a "Back" button 502, a display area 504 in which the designated spherical image is displayed, and a menu button 508. In this screen, a displayed part of the spherical image displayed in the display area 504 is moved in response to an operation of instructing a direction such as a flick.

When the menu button 508 is tapped on the image confirmation screen 500 illustrated in FIG. 17A, a menu including an "Add Annotation" button 510 for performing image annotation is displayed on the image confirmation screen 500, as illustrated in FIG. 17B. When the "Add Annotation" button 510 is tapped, the information terminal 50 receives an instruction for adding an annotation. When the "Back" button 502 is tapped on the image confirmation screen 500 illustrated in FIG. 17A, the information terminal 50 receives an instruction for returning to the content creation screen (e.g., the content creation screen (without floor plan) 460 of FIG. 16D).

When the determination result in step S115 that the instruction of "Add annotation" is accepted on the image confirmation screen 500 illustrated in FIG. 17B, the operation proceeds to step S116. In step S116, the information terminal 50 specifies a position to be associated, by the association position specifying unit 232. When the annotation addition is invoked through the menu button 508 on the image confirmation screen 500 illustrated in FIG. 17B, a position corresponding to substantially the center of the portion currently being displayed in the display area 504 of the spherical image is specified as an association position to which the annotation is added.

The description given above is of an example in which the "Add Annotation" button 510 is displayed in response to tapping the menu button 508 on the image confirmation screen 500 illustrated in FIG. 17A. However, this is just one example. In another example, the "Add Annotation" button 510 is displayed in response to a long tap (holding down) of a predetermined position (e.g., a position 505) in the display area 504 on the image confirmation screen 500 illustrated in FIG. 17A. When annotation addition is invoked by tapping an area in the display area 504, a position in the spherical image corresponding to a position when the area in the display area 504 is tapped is specified as the association position to which the annotation is to be added.

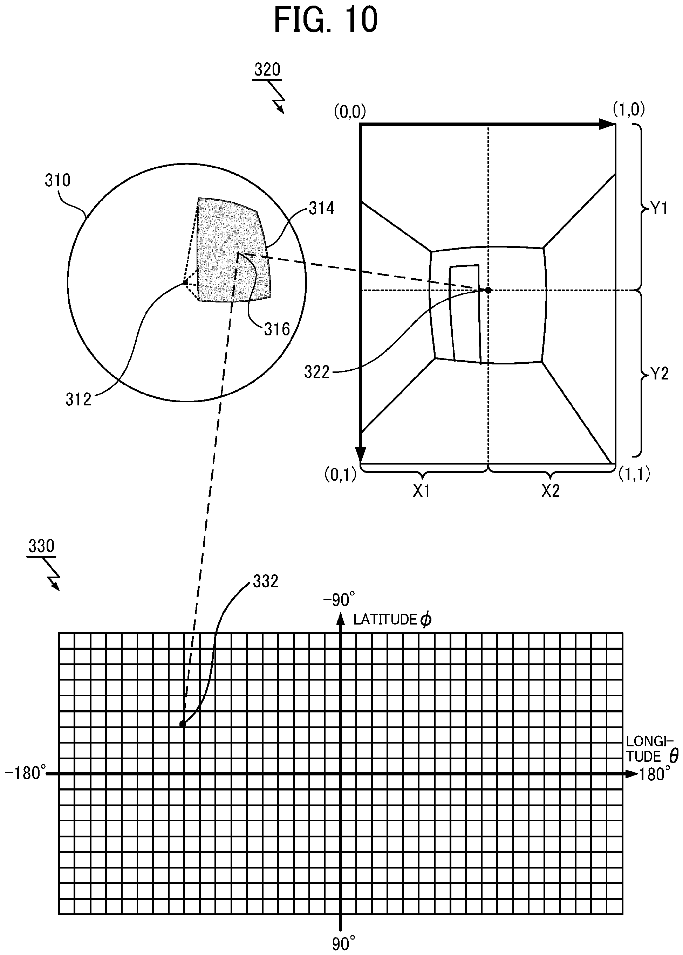

FIG. 10 is a diagram for describing how to associate an annotation with a position in a spherical image. As illustrated in a spherical image format 330 of FIG. 10, a spherical image is generated in a format in which a horizontal axis represents the longitude from -180 degrees to +180 degrees and a vertical axis represents the latitude from -90 degrees to +90 degrees.

When displaying such spherical image on a device having a flat surface such as the display 162 of the information terminal 50, the spherical image is mapped to a spherical object 310, and a virtual camera 312 is arranged, for example, at the center of the spherical object 310. Thereby, the spherical image is displayed as a projection image 314 viewed from the virtual camera 312. In other words, the display area 504 is displayed on the display in a predetermined size, and the projection image 314 generated from the spherical image is arranged in the display area 504. A position in the spherical image corresponding to the center position of the projection image 314 currently being displayed is acquired from a direction of the virtual camera 312. On the other hand, a certain position (e.g., a tapped position) 322 in the display area 504 is converted to a coordinate 332 on the spherical image format 330, from relative positions (X1/(X1+X2), Y1/(Y1+Y2)) as illustrated in FIG. 10, via a points 316 in a range corresponding to the projection image 314 on the spherical object 310. Although FIG. 10 illustrates an example in which the center is set as the origin, and the coordinate values are set in the range of longitude from -180 degrees to +180 degrees and latitude from -90 degrees to +90 degrees, in another example, the origin is set in any other suitable way and the range is set in any other suitable way. For example, the spherical image format 330 is represented in a format in which the horizontal axis indicates the longitude from 0 degree to 360 degrees and the vertical axis indicates the latitude from 0 degree to 180 degrees. In a case in which the wide-angle image is an image other than the spherical image, such as an image having an angle of view of 180 degrees or more, a coordinate of the image is set that supports the angle of view, instead of the coordinate of the spherical image described above.

Referring again to FIG. 6A, in step S117, the information terminal 50 sets the specified position in the spherical image as the association destination. In step S118, the information terminal 50 displays an annotation setting screen 520 as illustrated in FIG. 17C. The annotation setting screen 520 illustrated in FIG. 17C includes a "Select Image" button 522. In response to a user's tapping on the "Select Image" button 522, a process of registering an image captured by the built-in camera 168 of the information terminal 50 is invoked. Although in the embodiment, a description is given of an example in which only an image is added as an annotation, in another example, a text input field is provided such that text is also added as an annotation in addition to an image.

In step S119, the information terminal 50 displays a source selection menu that accepts a selection of a source from which a normal image is to be acquired, as illustrated in FIG. 17D. The source selection menu includes a "Photograph by Camera" button 524 for selecting the built-in camera and a "Select Image from Camera Roll" button 526 for selecting an image folder in the information terminal 50 as the source. When either one of the buttons is tapped, the operation proceeds to step S120. The "Photograph by Camera" button 524 constitutes a second instruction unit in the present embodiment.

In step S120, the information terminal 50 performs a normal image registration process.

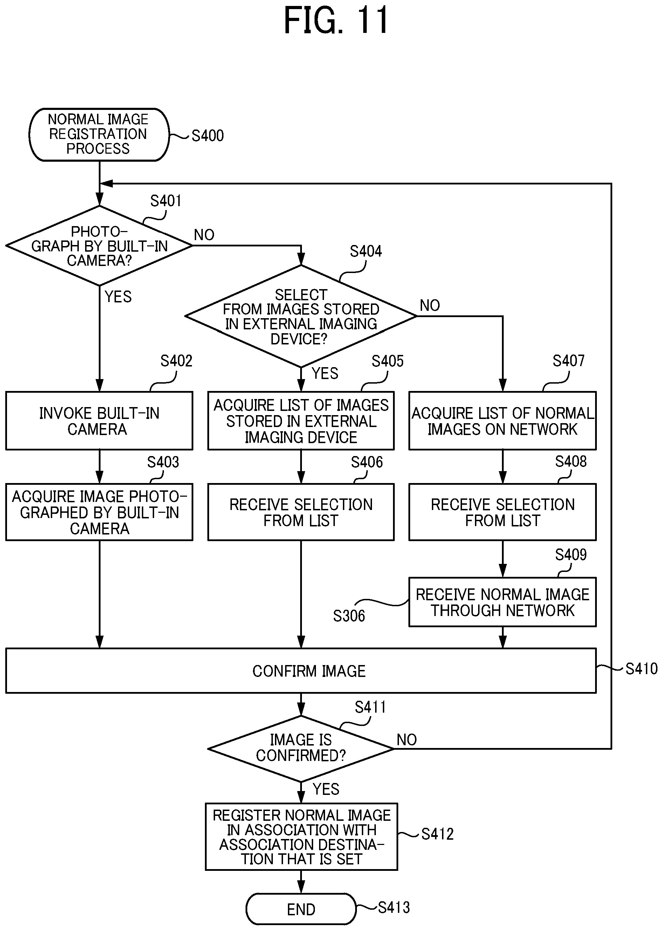

FIG. 11 is a flowchart illustrating an operation of registering a normal image. The operation illustrated in FIG. 11 is invoked by the process of step S120 illustrated in FIG. 6A and starts from step S400. In step S401, the information terminal 50 determines whether imaging by the built-in camera is designated. When the determination result in step 401 indicates that the "Photograph by Camera" button 524 is tapped in the source selection menu illustrated in FIG. 17D and therefore imaging by the built-in camera 168 is selected (S401: YES), the operation proceeds to step S402.

In step S402, the information terminal 50 invokes the built-in camera control unit 204 by the built-in imaging function invoking unit 226. FIG. 18A illustrates an imaging screen 530 for imaging a normal image with the built-in camera, which is displayed in response to the invocation of the built-in camera control unit 204. When an imaging button 532 is tapped on the imaging screen 530 illustrated in FIG. 18A and thereby the execution of the imaging process is completed, the operation proceeds to step S410. In step S403, the information terminal 50 acquires the normal image captured by the built-in camera 168, and the operation proceeds to step S410.

By contrast, when the determination result in step S401 indicates that imaging by the built-in camera 168 is not selected (S401: NO), the operation proceeds to step S404. In step S404, the information terminal 50 determines whether the information terminal 50 is selected as the source. When the determination result in step S404 indicates that the information terminal 50 is selected as the source (S404: YES), the operation proceeds to step S405.

In step S405, the information terminal 50 reads a list of images stored in the information terminal 50 and displays the list in a manner that a desired image is selected. In step S406, the information terminal 50 receives a selection of a particular image from the list of the images stored in the information terminal 50, and reads the selected image. Then, the operation proceeds to step S410.

By contrast, when the determination result in step S404 indicates that images stored in the information terminal 50 are not selected as the source (S404: NO), the operation proceeds to step S407. In step S407, the information terminal 50 acquires a list of normal images from an image management system (e.g. the content publishing server 70) communicable with the information terminal 50 via a network, and displays the acquired list. In step S408, the information terminal 50 receives a selection of a particular normal image from the list of the normal images stored in the image management system, and in step S409, receives the selected normal image via the network. Then, the operation proceeds to step S410. The processes from step S407 to step S409 are performed in a case in which the source selection menu illustrated in FIG. 17D includes a button for selecting the image management system as the source. However, in another example, such processes are omitted. In this case, the operation proceeds directly to step S413.

In step S410, the information terminal 50 displays a screen for confirming a spherical image to be used. In step S410, the information terminal 50 determines whether the normal image to be used is confirmed. FIG. 18B illustrates an image confirmation screen 540 for confirming the normal image. The image confirmation screen 540 includes a button 542 for confirming the use of the image that is currently being displayed and a button 544 for redoing the imaging or the selection.

When the determination result in step S411 indicates that the image is confirmed (S411: YES), as the button 542 is tapped on the image confirmation screen 540, the operation proceeds to step S412. In step S412, the information terminal 50 registers the content by associating the confirmed image with the association destination. In step S413, the operation returns to the operation of FIG. 6A. This association destination is the coordinate value of the particular position in the spherical image or a direction indicating a particular position, which are specified in step S117. Note that the registration of this association destination can be moved to a desired position afterwards. By contrast, when the determination result in step S411 indicates that the redo is designated (S411: NO), as the button 544 is tapped on the image confirmation screen 540, the operation returns to step S401.

When the operation returns to the operation of FIG. 6A, the operation returns to step S114 via the point B. In step S114, the information terminal 50 displays the image confirmation screen 500 that is updated, as illustrated in FIG. 18C. In the image confirmation screen 500 illustrated in FIG. 18C, a marker 550 indicating the position with which the normal image is associated is displayed in the display area 504 of the spherical image. The coordinate of the marker 550 corresponds to the coordinate set as the association destination when the normal image is associated and registered in step S412. Further, since there are one or more annotations, a button 552 for deleting an annotation and a button 554 for editing an annotation are displayed. However, a further detailed description of deleting and editing annotations is omitted, in order to simplify the description.

When the determination result in step S115 indicates that the information terminal 50 receives an instruction for returning to an upper level, as the "Back" button 502 is tapped on the image confirmation screen 500 illustrated in FIG. 17A or FIG. 18C, the operation proceeds to step S105 illustrated in FIG. 5 via the point C. In this case, an operation of registering another spherical image in association with a particular position on the floor plan of the content or in association with the content itself is performed.

It is assumed that the content creation screen (without floor plan) 460 as illustrated in FIG. 16D or the content creation screen (with floor plan) 440 in which a spherical image is registered at a particular position on a floor plan is displayed. When the determination result in step S107 or step S112 indicates that an instruction for "save" is accepted on the content creation screen (with floor plan) 440 or the content creation screen (without floor plan) 460, the operation proceeds to step S121 illustrated in FIG. 6B via a point A.

In step S121, the information terminal 50 stores the created spherical image content in the content storage unit 240. Then, the operation ends in step S122. In another example, instead of storing the spherical image content in the content storage unit 240 or in addition to storing the spherical image content in the content storage unit 240, the spherical image content is uploaded to the content publishing server 70.

In another example, any other suitable functions are provided, although a detailed description thereof is omitted below. Examples of the other suitable functions include deleting and replacing the registered spherical image and the normal image, before storing or uploading the spherical image content. Examples of the other suitable functions further include performing image processing such as blurring a particular area of the spherical image or the normal image, stamping, and reducing, before storing or uploading the spherical image content. Examples of the other suitable functions still further include inputting, changing, or deleting the name of the content or the spherical image, before storing or uploading the spherical image content.

For example, in a content that introduces a piece of real estate and equipment, a normal image obtained by photographing equipment provided in each of plural rooms is associated with a particular position of a spherical image of the corresponding room. On the other hand, in some cases, a normal image is obtained by photographing view from an entrance or a veranda. In this case, such normal image can be associated with the entire content rather than the spherical image of each room. In still another example, spherical images of plural rooms are associated with each other at a predetermined position (e.g., example, a position corresponding to the door).

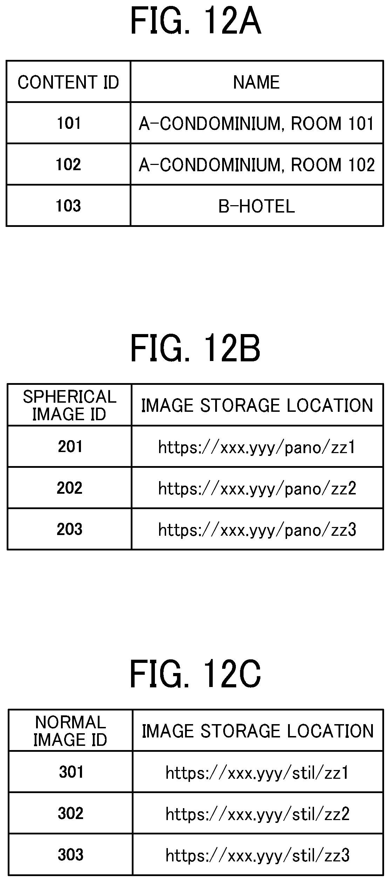

FIGs. 12A to 12F are diagrams illustrating a data structure in which a spherical image content generated by the information terminal 50 is stored, according to the present embodiment. FIG. 12A illustrates a content information management table that stores information such as a content identifier (ID) and a name in association with each other. FIG. 12B illustrates a spherical image management table that stores a spherical image ID in association with a storage location in which a spherical image identified by the corresponding spherical image ID is stored. FIG. 12C illustrates a normal image management table that stores a normal image ID in association with a storage location in which a normal image identified by the corresponding normal image ID is stored.

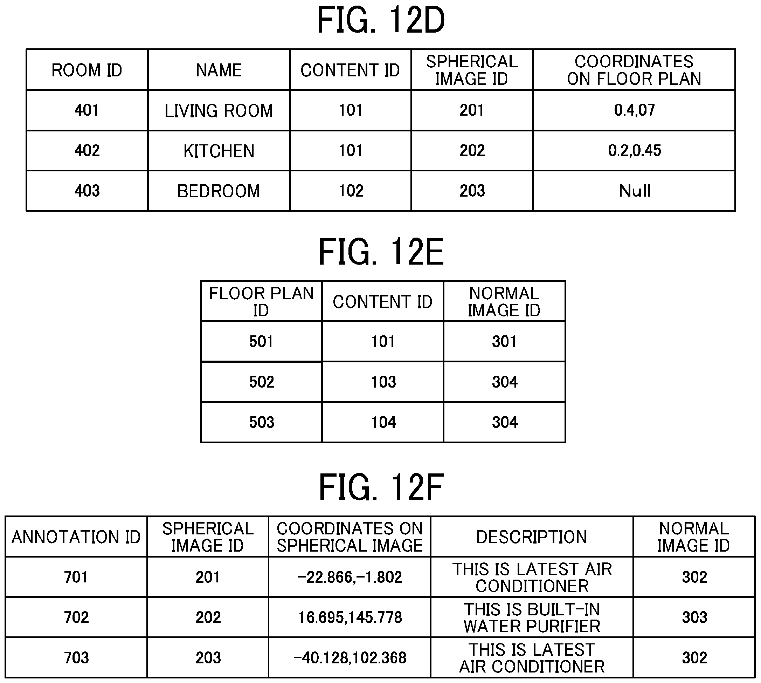

FIG. 12D illustrates a content element management DB that stores an ID of a content element, which is a target to be associated with a spherical image, such as a room ID, a name of the content element, a spherical image ID of a spherical image with the content element is to be associated, and coordinates on a floor plan, in association with each other. The coordinates on the floor plan are obtained as described above with reference to FIG. 8, for example, and stored. In the table, Null indicates that there is no value. In other words, Null in the table indicates that a content or a content element identified by a content ID 102 is a content including no floor plan or a room (content element) that is not associated with a position on the floor plan.

FIG. 12E illustrates a floor plan management table that stores a floor plan ID, a content ID, and a normal image ID indenting a normal image corresponding to the floor plan in association with each other. FIG. 12F illustrates an annotation management table that stores an annotation ID**,** a spherical image ID identifying a spherical image with which an annotation identified by the corresponding annotation ID is associated, coordinates at which the annotation is placed on the spherical image, a description of the annotation, and a normal image ID identifying a normal image to be added as the annotation, in association with each other. The coordinates on the spherical image are obtained as described with reference to FIG. 10. In another example, the annotation management table is configured such that the entire content is associated instead of associating the spherical image.

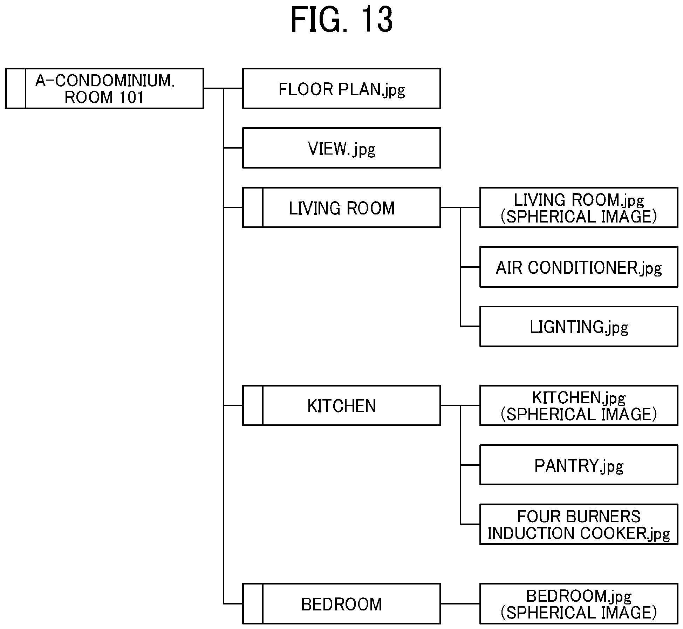

FIG. 13 is a diagram illustrating a file structure when a spherical image content generated by the information terminal 50 according to the present embodiment is exported. In FIG. 13, under a folder having a name of content, a file of an image of a floor plan, a file of an image of view, and folders each having a name of a spherical image are arranged. Under each folder having the name of the spherical image, a file of the spherical image and one or more files of normal images associated with the spherical image are arranged.

By the above-described operations, the spherical image content having a data structure schematically illustrated in FIG. 12 having a normal image associated with a certain position in the spherical image is created. Further, when viewing the spherical image content by using a viewer application, a normal image is displayed as being embedded in the spherical image as an annotation. For example, in the viewer application, in response to a predetermined operation (e.g., tap, click, etc.) on an image element (e.g., a marker, icon, or symbol) arranged at an annotation position in the spherical image, the normal image associated with the annotation position pops up.

As described heretofore, according to the described embodiment, in an information processing apparatus (a computer) including imaging means, a program implementing the information processing apparatus configured to integrate a function of controlling an external imaging device to capture an image and a function of imaging by the imaging means that the information processing apparatus (the computer) includes, and manage a plurality of types of captured images collectively, a storage medium storing the program, and the information processing apparatus are provided.

In the above-described embodiment, a function of controlling an external imaging device to capture an image and a function of capturing an image with imaging means that the information processing apparatus itself includes are integrated into a single application. Therefore, a user is saved from having to use the function of controlling the external imaging device to capture an image and the function of capturing an image by the imaging means in separate applications.

Further, when using the different imaging functions in different applications respectively, images are to be temporarily stored in an image folder such as a camera roll and registered in a content via the image folder. However, in this case, although the images can be stored in chronological order in the image folder, the images to be registered in different contents are sometimes stored in a mixed manner. In some cases, this makes it difficult to correctly register the images in the content. By contrast, in the above-described embodiment, since a plurality of types of images are collectively managed, complications caused by the intervening image folder are reduced.

Further, integrating the capturing of the spherical image and the capturing of the normal image for content creation reduces time and efforts of a creator of the content. Since the creator can perform up to photographing a normal image on the content creation application installed in the information terminal 50, as long as the spherical imaging device 10 and the information terminal 50 are provided, photographic equipment such as a general-purpose is not required. Thus, capturing a normal image or movie, which is required in the related art, is no more required. Furthermore, a content, a floor plan (optional), a spherical image, and a normal image are associated without time and efforts. This reduces time and efforts of classifying and managing the captured normal images.

In the embodiment, the description given above is of an example in which a content to be created is a spherical image content including a spherical image as a wide-angle image. However, the spherical image is just one example of the wide-angle image. In another example, the wide-angle image is a panoramic image obtained by photographing 360 degrees in a horizontal plane or an image that is a part of the image obtained by photographing omnidirectionally or 360 degrees in a horizontal plane. In the disclosure, the wide-angle image refers to an image having a relatively large angle of view as compared with a normal image, and preferably an image having an angle of view of at least a horizontal angle of view of 180 degrees or more. In still another example, the wide-angle image is an image having a large angle of view captured by one or more imaging devices. The normal image is either a still image or a moving image. The normal image an image having a narrower angle of view than the wide-angle image, and more specifically, an image having an angle of view of 100 to 25 degrees, preferably 70 to 45 degrees.

In the embodiment, the description given above is of an example in which the spherical image and the normal image are each a still image. However, the spherical image and the normal image are each not limited to a still images. In another example, the spherical image and the normal image is a semi-moving image (e.g., a time lapse movie, an interval-shot images, animation), which includes a series of still images. In this case, image association is performed by using time information such as a time and a frame interval as the association destination, in addition to the particular position in the spherical image.

Each of the functions of the described embodiments may be implemented by one or more processing circuits or circuitry. Processing circuitry includes a programmed processor, as a processor includes circuitry. A processing circuit also includes devices such as an application specific integrated circuit (ASIC), digital signal processor (DSP), field programmable gate array (FPGA) and conventional circuit components arranged to perform the recited functions.

The functional blocks as described above are implemented by a computer-executable program written by programming languages such as an assembler language, C, and object-oriented programming languages such as C++, C#, and Java (registered trademark). The program may be distributed through a telecommunication line or as being stored in a computer-executable storage medium such as a ROM, an electrically erasable and programmable read only memory (EEPROM), an electrically programmable read only memory (EPROM), a flash memory, a flexible disk, a compact disk read only memory (CD-ROM), a compact disk rewritable (CD-RW), a digital versatile disk read only memory (DVD-ROM), a digital versatile disk random access memory (DVD-RAM), a digital versatile disk rewritable (DVD-RW), a Blu-ray disk, an SD card, and a magneto-optical disk (MO).

The present invention may be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, personal digital assistant, mobile telephone (such as a WAP or 3G-compliant phone) and so on. As the present invention may be implemented as software, each and every aspect of the present invention thus encompasses computer software implementable on a programmable device. The computer software may be provided to the programmable device using any conventional carrier medium (carrier means). The carrier medium includes a transient carrier medium such as an electrical, optical, microwave, acoustic or radio frequency signal carrying the computer code. An example of such a transient medium is a TCP/IP signal carrying computer code over an IP network, such as the Internet. The carrier medium may also include a storage medium for storing processor readable code such as a floppy disk, hard disk, CD ROM, magnetic tape device or solid state memory device.

## Claims

1. An information processing method performed by an information processing apparatus (50) including communication means (164) and imaging means (168), the information processing apparatus (50) being installed with an application program, the method comprising:
executing the application program to:
control, via the communication means (164), an external imaging device (10) to capture a wide-angle image and transmit the captured wide-angle image to the information processing apparatus (50);
control the imaging means (168) to capture an image;
specify a particular position in the wide-angle image captured by the external imaging device (10);
associate the wide-angle image with the image captured by the imaging means (168) by associating the captured image with the particular position in the wide-angle image;
and further **characterized by** executing the application program to :
create an image element arranged at the particular position of the wide-angle image, wherein, the image element is configured so that, when the image element and the wide-angle image are displayed on a display, a predetermined operation on the image element causes the image captured by the imaging means (168) to be displayed on the display at the particular position.

2. The information processing method of claim 1, wherein
the specifying specifies a central area of a display area of the wide-angle image displayed on built-in display means (162) of the information processing apparatus (50) or external display means as the particular position in the wide-angle image.

3. The information processing method of claim 1, wherein
the specifying specifies an area designated by input means (158) of the information processing apparatus (50) of a display area of the wide-angle image displayed on built-in display means (162) of the information processing apparatus (50) or external display means as the particular position in the wide-angle image.

4. The information processing method of claim 2 or 3, wherein
the wide-angle image is a spherical image or an image having an angle of view of 180 degrees or more,
the display area is an area displaying an image obtained by projecting a part of the spherical image or a part of the image having the angle of view of 180 degrees or more onto a plane, and the particular position is coordinates on the spherical image or the image having the angle of view of 180 degrees or more.

5. The information processing method of any one of claims 1 to 4, further comprising:
providing a first instruction unit (452) that receives an instruction for controlling the external imaging device (10) to perform imaging; and
providing a second instruction unit (524) that receives an instruction for invoking the imaging function implemented by the imaging means (168) after the external imaging device (10) performs the imaging.

6. The information processing method of any one of claims 1 to 5, wherein
the associating associates a second captured image acquired from the imaging means (168) with a content including the wide-angle image.

7. The information processing method of any one of claims 1 to 6, wherein
the associating associates at least one of a stored image and an externally-acquired image in association with the wide-angle image, the stored image being an image stored in a storage medium that the information processing apparatus (50) includes, and the externally-acquired image being an image received from an image management system (70) communicable with the information processing apparatus (50).

8. Carrier means carrying computer readable codes for controlling a computer including an information processing apparatus according to claim 9 to carry out the method of any one of claims 1 to 7.

9. An information processing apparatus (50) having an application program installed thereon for carrying out the information processing method of any one of claims 1 to 7, the information processing apparatus comprising:
communication means (164) for controlling an external imaging device (10) to capture a wide-angle image and transmit the wide-angle image to the information processing apparatus (50);
imaging means (168) for capturing an image;
first acquisition means (222) for acquiring a wide-angle image from an external imaging device (10) via the communication means (164);
invoking means (226) for invoking an imaging function implemented by the imaging means (168);
second acquisition means (226) for acquiring a captured image imaged by the imaging means (168);
association position specifying unit (232) for specifying a particular position in the wide-angle image acquired by the first acquisition means (222);
associating means (230) for associating the wide-angle image acquired by the first acquisition means (222) with the captured image acquired by the second acquisition means (226) by associating the captured image with the particular position in the wide-angle image; and **characterized by** further comprising
means for creating an image element arranged at the a particular position of the wide-angle image, the image element being configured so that, when the image element and the wide-angle image are displayed on a display, a predetermined operation on the image element causes the image captured by the imaging means (168) to be displayed on the display at the particular position.

## Patentansprüche

1. Informationsverarbeitungsverfahren, das von einer Informationsverarbeitungsvorrichtung (50) durchgeführt wird, die Kommunikationsmittel (164) und Bildgebungsmittel (168) einschließt, wobei die Informationsverarbeitungsvorrichtung (50) mit einem Anwendungsprogramm installiert ist, wobei das Verfahren Folgendes umfasst:
Ausführen des Anwendungsprogramms zu Folgendem:
Steuern, über die Kommunikationsmittel (164), einer externen Bildgebungseinrichtung (10), um ein Weitwinkelbild zu erfassen und das erfasste Weitwinkelbild an die Informationsverarbeitungsvorrichtung (50) zu übertragen;
Steuern der Bildgebungsmittel (168), um ein Bild zu erfassen;
Spezifizieren einer bestimmten Position in dem von der externen Bildgebungseinrichtung (10) erfassten Weitwinkelbild;
Zuordnen des Weitwinkelbilds zu dem von den Bildgebungsmitteln (168) erfassten Bild, indem das erfasste Bild der bestimmten Position in dem Weitwinkelbild zugeordnet wird;
und ferner **gekennzeichnet durch** das Ausführen des Anwendungsprogramms zu Folgendem:
Erzeugen eines Bildelements, das an der bestimmten Position des Weitwinkelbildes angeordnet ist, wobei das Bildelement derart konfiguriert ist, dass, wenn das Bildelement und das Weitwinkelbild auf einer Anzeige angezeigt werden, eine vorbestimmte Operation auf dem Bildelement bewirkt, dass das von den Bildgebungsmitteln (168) erfasste Bild auf der Anzeige an der bestimmten Position angezeigt wird.

2. Informationsverarbeitungsverfahren nach Anspruch 1, wobei
das Spezifizieren einen zentralen Bereich eines Anzeigebereichs des auf eingebauten Anzeigemitteln (162) der Informationsverarbeitungsvorrichtung (50) oder externen Anzeigemitteln angezeigten Weitwinkelbilds als die bestimmte Position in dem Weitwinkelbild spezifiziert.

3. Informationsverarbeitungsverfahren nach Anspruch 1, wobei
das Spezifizieren einen Bereich spezifiziert, der durch Eingabemittel (158) der Informationsverarbeitungsvorrichtung (50) eines Anzeigebereichs des Weitwinkelbildes, das auf eingebauten Anzeigemitteln (162) der Informationsverarbeitungsvorrichtung (50) oder externen Anzeigemitteln angezeigt wird, als die bestimmte Position in dem Weitwinkelbild bezeichnet wird.

4. Informationsverarbeitungsverfahren nach Anspruch 2 oder 3, wobei
das Weitwinkelbild ein sphärisches Bild oder ein Bild mit einem Blickwinkel von 180 Grad oder mehr ist,
der Anzeigebereich ein Bereich ist, der ein Bild anzeigt, das durch Projizieren eines Teils des sphärischen Bildes oder eines Teils des Bildes mit dem Blickwinkel von 180 Grad oder mehr auf eine Ebene erhalten wird, und die bestimmte Position aus Koordinaten auf dem sphärischen Bild oder dem Bild mit dem Blickwinkel von 180 Grad oder mehr besteht.

5. Informationsverarbeitungsverfahren nach einem der Ansprüche 1 bis 4, ferner Folgendes umfassend:
Bereitstellen einer ersten Anweisungseinheit (452), die eine Anweisung zum Steuern der externen Bildgebungseinrichtung (10) empfängt, um eine Bildgebung durchzuführen; und
Bereitstellen einer zweiten Anweisungseinheit (524), die eine Anweisung zum Aufrufen der Bildgebungsfunktion empfängt, die durch die Bildgebungsmittel (168) implementiert wird, nachdem die externe Bildgebungseinrichtung (10) die Bildgebung durchführt.

6. Informationsverarbeitungsverfahren nach einem der Ansprüche 1 bis 5, wobei
das Zuordnen ein zweites erfasstes Bild, das von den Bildgebungsmitteln (168) erlangt wird, einem Inhalt zuordnet, der das Weitwinkelbild einschließt.

7. Informationsverarbeitungsverfahren nach einem der Ansprüche 1 bis 6, wobei
das Zuordnen mindestens eines von einem gespeicherten Bild und einem extern erlangten Bild in Verbindung mit dem Weitwinkelbild zuordnet, wobei das gespeicherte Bild ein Bild ist, das in einem Speichermedium gespeichert ist, das die Informationsverarbeitungsvorrichtung (50) einschließt, und das extern erlangte Bild ein Bild ist, das von einem Bildverwaltungssystem (70) empfangen wird, das mit der Informationsverarbeitungsvorrichtung (50) kommunizieren kann.

8. Trägermittel, das computerlesbare Codes zum Steuern eines Computers trägt, der eine Informationsverarbeitungsvorrichtung nach Anspruch 9 einschließt, um das Verfahren nach einem der Ansprüche 1 bis 7 zu vollziehen.

9. Informationsverarbeitungsvorrichtung (50) mit einem darauf installierten Anwendungsprogramm zum Vollziehen des Informationsverarbeitungsverfahrens nach einem der Ansprüche 1 bis 7, wobei die Informationsverarbeitungsvorrichtung Folgendes umfasst:
Kommunikationsmittel (164) zum Steuern einer externen Bildgebungseinrichtung (10), um ein Weitwinkelbild zu erfassen und das Weitwinkelbild an die Informationsverarbeitungsvorrichtung (50) zu übertragen;
Bildgebungsmittel (168) zum Erfassen eines Bildes;
erste Erlangungsmittel (222) zum Erlangen eines Weitwinkelbildes von einer externen Bildgebungseinrichtung (10) über die Kommunikationsmittel (164);
Aufrufmittel (226) zum Aufrufen einer Bildgebungsfunktion, die durch die Bildgebungsmittel (168) implementiert ist;
zweite Erlangungsmittel (226) zum Erlangen eines erfassten Bildes, das durch die Bildgebungsmittel (168) abgebildet wird;
Zuordnungspositionsspezifizierungseinheit (232) zum Spezifizieren einer bestimmten Position in dem von den ersten Erlangungsmitteln (222) erlangten Weitwinkelbilds;
Zuordnungsmittel (230) zum Zuordnen des von den ersten Erlangungsmitteln (222) erlangten Weitwinkelbilds zu dem von den zweiten Erlangungsmitteln (226) erlangten erfassten Bild durch Zuordnen des erfassten Bilds zu der bestimmten Position in dem Weitwinkelbild;
und **dadurch gekennzeichnet, dass** sie ferner Folgendes umfasst:
Mittel zum Erzeugen eines Bildelements, das an der einer bestimmten Position des Weitwinkelbildes angeordnet ist, wobei das Bildelement so konfiguriert ist, dass, wenn das Bildelement und das Weitwinkelbild auf einer Anzeige angezeigt werden, eine vorbestimmte Operation auf dem Bildelement bewirkt, dass das von den Bildgebungsmitteln (168) erfasste Bild auf der Anzeige an der bestimmten Position angezeigt wird.

## Revendications

1. Procédé de traitement d'informations réalisé par un appareil de traitement d'informations (50) incluant des moyens de communication (164) et des moyens d'imagerie (168), l'appareil de traitement d'informations (50) étant installé avec un programme d'application, le procédé comprenant :
l'exécution du programme d'application pour :
commander, *via* les moyens de communication (164), un dispositif d'imagerie externe (10) pour capturer une image grand angle et transmettre l'image grand angle capturée à l'appareil de traitement d'informations (50) ;
commander les moyens d'imagerie (168) pour capturer une image ;
spécifier une position particulière dans l'image grand angle capturée par le dispositif d'imagerie externe (10) ;
associer l'image grand angle à l'image capturée par les moyens d'imagerie (168) en associant l'image capturée à la position particulière dans l'image grand angle ;
et **caractérisé en outre par** l'exécution du programme d'application pour :
créer un élément d'image agencé à la position particulière de l'image grand angle, dans lequel l'élément d'image est configuré de sorte que, lorsque l'élément d'image et l'image grand angle sont affichés sur un affichage, une opération prédéterminée sur l'élément d'image provoque l'affichage de l'image capturée par les moyens d'imagerie (168) sur l'affichage à la position particulière.

2. Procédé de traitement d'informations selon la revendication 1, dans lequel
la spécification spécifie une zone centrale d'une zone d'affichage de l'image grand angle affichée sur des moyens d'affichage intégrés (162) de l'appareil de traitement d'informations (50) ou des moyens d'affichage externes en tant que position particulière dans l'image grand angle.

3. Procédé de traitement d'informations selon la revendication 1, dans lequel
la spécification spécifie une zone désignée par des moyens d'entrée (158) de l'appareil de traitement d'informations (50) d'une zone d'affichage de l'image grand angle affichée sur des moyens d'affichage intégrés (162) de l'appareil de traitement d'informations (50) ou sur des moyens d'affichage externes en tant que position particulière dans l'image grand angle.

4. Procédé de traitement d'informations selon la revendication 2 ou 3, dans lequel
l'image grand angle est une image sphérique ou une image ayant un angle de vue de 180 degrés ou plus,
la zone d'affichage est une zone affichant une image obtenue par la projection sur un plan d'une partie de l'image sphérique ou d'une partie de l'image ayant l'angle de vue de 180 degrés ou plus, et la position particulière est des coordonnées sur l'image sphérique ou l'image ayant l'angle de vue de 180 degrés ou plus.

5. Procédé de traitement d'informations selon l'une quelconque des revendications 1 à 4, comprenant en outre :
la fourniture d'une première unité d'instruction (452) qui reçoit une instruction pour commander le dispositif d'imagerie externe (10) pour effectuer l'imagerie ; et
la fourniture d'une deuxième unité d'instruction (524) qui reçoit une instruction pour appeler la fonction d'imagerie mise en œuvre par les moyens d'imagerie (168) après que le dispositif d'imagerie externe (10) effectue l'imagerie.

6. Procédé de traitement d'informations selon l'une quelconque des revendications 1 à 5, dans lequel
l'association associe une deuxième image capturée acquise à partir des moyens d'imagerie (168) à un contenu incluant l'image grand angle.

7. Procédé de traitement d'informations selon l'une quelconque des revendications 1 à 6, dans lequel
l'association associe au moins une image parmi une image stockée et une image acquise de l'extérieur en association avec l'image grand angle, l'image stockée étant une image stockée dans un support de stockage que l'appareil de traitement d'informations (50) inclut, et l'image acquise de l'extérieur étant une image reçue d'un système de gestion d'images (70) communicable avec l'appareil de traitement d'informations (50).

8. Moyen porteur portant des codes lisibles par ordinateur pour commander un ordinateur incluant un appareil de traitement d'informations selon la revendication 9 pour mettre en œuvre le procédé selon l'une quelconque des revendications 1 à 7.

9. Appareil de traitement d'informations (50) sur lequel est installé un programme d'application pour la mise en œuvre du procédé de traitement d'informations selon l'une quelconque des revendications 1 à 7, l'appareil de traitement d'informations comprenant :
des moyens de communication (164) pour commander un dispositif d'imagerie externe (10) pour capturer une image grand angle et transmettre l'image grand angle à l'appareil de traitement d'informations (50) ;
des moyens d'imagerie (168) pour capturer une image ;
des premiers moyens d'acquisition (222) pour acquérir une image grand angle à partir d'un dispositif d'imagerie externe (10) *via* les moyens de communication (164) ;
des moyens d'appel (226) pour appeler une fonction d'imagerie mise en œuvre par les moyens d'imagerie (168) ;
des deuxièmes moyens d'acquisition (226) pour acquérir une image capturée imagée par les moyens d'imagerie (168) ;
une unité de spécification de position d'association (232) pour spécifier une position particulière dans l'image grand angle acquise par les premiers moyens d'acquisition (222) ;
des moyens d'association (230) pour associer l'image grand angle acquise par les premiers moyens d'acquisition (222) à l'image capturée acquise par les deuxièmes moyens d'acquisition (226) en associant l'image capturée à la position particulière dans l'image grand angle ;
et **caractérisé par** le fait de comprendre en outre
des moyens pour créer un élément d'image agencé à la une position particulière de l'image grand angle, l'élément d'image étant configuré de manière que, lorsque l'élément d'image et l'image grand angle sont affichés sur un affichage, une opération prédéterminée sur l'élément d'image provoque l'affichage de l'image capturée par les moyens d'imagerie (168) sur l'affichage à la position particulière.
